# EUROPEAN PATENT SPECIFICATION

(11) **EP 3 669 569 B1**
(45) Date of publication and mention of the grant of the patent: **19.02.2025**
(21) Application number: 18746664.4
(22) Date of filing: 24.07.2018
(51) Int. Cl.: H04W 24/10, H04W 76/27, H04W 68/00, H04W 76/28, H04W 76/30, H04W 16/28

(54) **MONITORING CONNECTIVITY IN DISCONNECTED MODE**
ÜBERWACHUNG DER KONNEKTIVITÄT IM GETRENNTEN MODUS
SURVEILLANCE DE CONNECTIVITÉ EN MODE DÉCONNECTÉ

(30) Priority: 18.08.2017 SE 1730219
(43) Date of publication of application: 24.06.2020
(73) Proprietor: Sony Group Corporation, Tokyo 108-0075 (JP)
(72) Inventor: LJUNG, Rickard, 256 56 Helsingborg (SE); LÖNNBLAD, Daniel, 247 99 Genarp (SE); MELLQVIST, Anders, 221 88 Lund (SE)
(74) Representative: Kraus & Lederer PartGmbB
(86) International application number: PCT/EP2018/070020
(87) International publication number: WO 2019/034378

(56) References cited:
- WO-A1-2015/192883
- WO-A1-2016/123435
- "3rd Generation Partnership Project; Technical Specification Group Radio Access Network; Study on New Radio (NR) access technology (Release 14)", 3GPP STANDARD ; TECHNICAL SPECIFICATION ; 3GPP TR 38.912, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. V14.1.0, 3 August 2017 (2017-08-03), pages 1 - 74, XP051336695
- RATASUK RAPEEPAT ET AL: "Coverage enhancement for M2M communications using LTE", 2014 21ST INTERNATIONAL CONFERENCE ON TELECOMMUNICATIONS (ICT), IEEE, 4 May 2014 (2014-05-04), pages 482 - 486, XP032969700, ISBN: 978-1-4799-5139-0, [retrieved on 20160922], DOI: 10.1109/ICT.2014.7575093

## Description

### TECHNICAL FIELD

Various examples of the invention generally relate to techniques of monitoring connectivity of a communication device while the communication device operates in a disconnected mode.

### BACKGROUND

Secure and reliable wireless communication is an important part of modern infrastructure. The usage of machine-to-machine (M2M) communications and other Internet of Things (IoT) applications increases significantly, e.g., as communication devices (UEs) shrink in size and costs.

One example of wireless communication is communication according to the Third Generation Partnership Project (3GPP) framework. Here, M2M communication, industrial IOT, and vehicle-to-vehicle (V2V) or vehicle-to-everything (V2x) communication is expected to require highly reliable connectivity. Network failures or coverage issues are to be avoided or, at least, detected. For example, within the 3GPP New Radio (NR) access system, ultra-reliable-low-latency is used to describe a toolset to achieve such highly reliable connectivity, along with low latency. Thereby, occurrence of network failures or coverage issues are to be monitored such that appropriate countermeasures may be taken, if needed. This is to facilitate a quick reaction to situations when a UE is no longer reachable or otherwise exhibits limited connectivity.

WO 2015/192883 A1 relates to a paging profiling method for determining a number of page repetition and a time interval between the page repetitions. The method comprises triggering the paging profiling by causing a page relating to one or more wireless communication devices. In some embodiments the method may further comprise updating an entry of a paging pattern database based on the paging profiling, wherein the entry is associated with a geographical area in which the one or more wireless communication devices reside. The paging pattern database may, for example, be comprised in a server. In some embodiments, the method may also comprise detecting that the paging profiling is needed by detecting that the entry of the paging pattern database is not valid, and triggering the paging profiling may be enabled responsive to detecting that the paging profiling is needed. Corresponding paging profiling arrangement, computer program product, wireless communication device and server are also disclosed.

RATASUK RAPEEPAT ET AL.: "Coverage enhancement for M2M communications using LTE", 2014 21ST INTERNATIONAL CONFERENCE ON TELECOMMUNICATIONS (ICT), IEEE, 4 May 2014, pages 482-486, DOI: 10.1109/ICT further discusses methods for coverage enhancement.

WO 2016/123435 A1 relates to wireless communications, and more specifically to enhanced paging procedures for devices with limited communications resources, such as machine type communication (MTC) devices and enhanced or evolved MTC (eMTC) devices. An example method generally includes determining a set of subframes corresponding to a paging occasion for the UE to receive a paging message from a base station (BS), determining, within the set of subframes, at least one narrowband region for receiving the paging message, and monitoring for the paging message in the at least one narrowband region within the set of subframes.

### SUMMARY

Therefore, a need exists for advanced techniques of monitoring connectivity of UEs.

The invention is defined in the independent claims. Additional features of the invention are provided in the dependent claims.

A method of operating a communication device includes receiving at least one downlink signal transmitted by a base station of a network. The at least one control message is received while the communication device operates in a disconnected mode in which a data connection is not set-up between the communication device and the network. The method further includes determining a receive property of the at least one downlink signal based on said receiving. The method may optionally further include transmitting an uplink report signal indicative of the receive property of the at least one downlink signal.

A computer program product includes program code that may be executed by at least one processor. Executing the program code causes the at least one processor to perform a method of operating a communication device. The method includes receiving at least one downlink signal transmitted by a base station of a network. The at least one control message is received while the communication device operates in a disconnected mode in which a data connection is not set-up between the communication device and the network. The method further includes determining a receive property of the at least one downlink signal based on said receiving. The method may optionally further include transmitting an uplink report signal indicative of the receive property of the at least one downlink signal.

A computer program includes program code that may be executed by at least one processor. Executing the program code causes the at least one processor to perform a method of operating a communication device. The method includes receiving at least one downlink signal transmitted by a base station of a network. The at least one control message is received while the communication device operates in a disconnected mode in which a data connection is not set-up between the communication device and the network. The method further includes determining a receive property of the at least one downlink signal based on said receiving. The method may optionally further include transmitting an uplink report signal indicative of the receive property of the at least one downlink signal.

A communication device includes control circuitry which is configured to perform: while the communication device operates in a disconnected mode in which a data connection is not set-up between the communication device and a network: receiving at least one downlink signal transmitted by a base station of the network; and determining a receive property of the at least one downlink signal based on said receiving; and, optionally, transmitting an uplink report signal indicative of the receive property of the at least one downlink signal.

A method of operating a base station of a network includes transmitting at least one downlink signal. The method further includes receiving, from a communication device, an uplink report signal. The uplink report signal is indicative of a receive property of the at least one downlink signal. The at least one downlink signal is received by the communication device while the communication device operates in a disconnected mode in which a data connection is not set-up between the communication device and the network.

A computer program product includes program code that may be executed by at least one processor. Executing the program code causes the at least one processor to perform a method of operating a base station. The method includes transmitting at least one downlink signal. The method further includes receiving, from a communication device, an uplink report signal. The uplink report signal is indicative of a receive property of the at least one downlink signal. The at least one downlink signal is received by the communication device while the communication device operates in a disconnected mode in which a data connection is not set-up between the communication device and the network.

A computer program includes program code that may be executed by at least one processor. Executing the program code causes the at least one processor to perform a method of operating a base station. The method includes transmitting at least one downlink signal. The method further includes receiving, from a communication device, an uplink report signal. The uplink report signal is indicative of a receive property of the at least one downlink signal. The at least one downlink signal is received by the communication device while the communication device operates in a disconnected mode in which a data connection is not set-up between the communication device and the network.

A base station of a network includes control circuitry configured to perform: transmitting at least one downlink signal; receiving, from a communication device, an uplink report signal indicative of a receive property of the at least one downlink signal received by the communication device while the communication device operates in a disconnected mode in which a data connection is not set-up between the communication device and the network.

A method of operating a base station of a network includes transmitting at least one downlink signal. The at least one downlink signal is transmitted while a communication device operates in a disconnected mode in which a data connection is not set-up between the communication device and the network. The method further includes receiving, from the communication device, an uplink report signal. The uplink report signal is indicative of a receive property of the at least one downlink signal.

A computer program product includes program code that may be executed by at least one processor. Executing the program code causes the at least one processor to perform a method of operating a base station. The method includes transmitting at least one downlink signal. The at least one downlink signal is transmitted while a communication device operates in a disconnected mode in which a data connection is not set-up between the communication device and the network. The method further includes receiving, from the communication device, an uplink report signal. The uplink report signal is indicative of a receive property of the at least one downlink signal.

A computer program includes program code that may be executed by at least one processor. Executing the program code causes the at least one processor to perform a method of operating a base station. The method includes transmitting at least one downlink signal. The at least one downlink signal is transmitted while a communication device operates in a disconnected mode in which a data connection is not set-up between the communication device and the network. The method further includes receiving, from the communication device, an uplink report signal. The uplink report signal is indicative of a receive property of the at least one downlink signal.

A base station of a network includes control circuitry configured to perform: transmitting at least one downlink signal while a communication device operates in a disconnected mode in which a data connection is not set-up between the communication device and the network; and receiving, from the communication device, an uplink report signal. The uplink report signal is indicative of a receive property of the at least one downlink signal.

A system includes a base station of a network, the base station including first control circuitry. The system also includes a communication device including second control circuitry. The first control circuitry is configured to transmit at least one downlink signal. The second control circuitry is configured to receive the at least one downlink signal, while the communication device operates in a disconnected mode in which a data connection is not set-up between the communication device and the network. The at least one downlink signal may or may not be directed to the communication device. The second control circuitry is configured to determine a receive property of the at least one downlink signal based on said receiving. The second control circuitry may optionally be configured to transmit an uplink report signal which is indicative of the receive property of the at least one downlink signal. The first control circuitry may optionally be configured to receive the uplink report signal.

It is to be understood that the features mentioned above and those yet to be explained below may be used not only in the respective combinations indicated, but also in other combinations or in isolation.

### BRIEF DESCRIPTION OF THE DRAWINGS

FIG. 1 schematically illustrates aspects with respect to an example implementation of a network to which a UE is registered.
FIG. 2 schematically illustrates different modes in which the UE may operate according to various examples.
FIG. 3 schematically illustrates operation of the UE in the different modes and further illustrates discontinuous reception cycles associated with the different modes according to various examples.
FIG. 4 is a signaling diagram schematically illustrating transitioning between an idle mode and a connected mode according to various examples.
FIG. 5 schematically illustrates multiple cells of the network which, according to various examples, form a tracking area.
FIG. 6 schematically illustrates the UE according to various examples.
FIG. 7 schematically illustrates the BS according to various examples.
FIG. 8 is a signaling diagram schematically illustrating receiving downlink signals and transmitting uplink report signals indicative of receive properties of the downlink signals according to various examples.
FIG. 9 schematically illustrates a repetitive probing schedule for a UE receiving DL signals in a disconnected mode and further illustrates time-alignment of the repetitive proving schedule with a discontinuous reception cycle of the UE, according to various examples.
FIG. 10 is a signaling diagram schematically illustrating receiving downlink signals and transmitting uplink report signals indicative of receive properties of the downlink signals according to various examples.
FIG. 11 schematically illustrates the repetitive probing schedule and a repetitive reporting schedule for the UE transmitting UL report signals according to various examples.
FIG. 12 is a signaling diagram schematically illustrating transmitting the UL report signal by setting up a data connection according to various examples.
FIG. 13 is a signaling diagram schematically illustrating transmitting the UL report signal by using pre-allocated time-frequency resources in disconnected mode according to various examples.
FIG. 14 schematically illustrates an UL report signal according to various examples.
FIG. 15 schematically illustrates an UL report signal according to various examples.
FIG. 16 schematically illustrates an UL report signal according to various examples.
FIG. 17 is a signaling diagram schematically illustrating transmitting the UL report signal and triggering a countermeasure depending on the UL report signal according to various examples.
FIG. 18 is a flowchart of a method according to various examples.
FIG. 19 is a flowchart of a method according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense. The embodiments described hereinafter or by the drawings are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of monitoring connectivity of UEs are described. In particular, by means of the techniques described herein, it may be possible to reliably and flexibly detect limited connectivity.

Limited connectivity may be associated with reduced or no reachability of the respective UE. A latency of communication between a network and the UE may be significantly increased in the state of limited connectivity. Limited connectivity may be associated with a certain degraded reachability level of the UE. By the techniques described herein, functionality to supervise the reachability may be provided. Thereby, the network can ensure that it is capable of contacting the UE if need be, e.g., at a certain connection probability that is associated with the connectivity. Here, a reachability level may correspond to the success ratio of communicating uplink signals and/or downlink signals between the UE and the network.

Various techniques described herein enable monitoring connectivity of UEs across different operation modes of the UE. In particular, techniques described herein may enable monitoring the connectivity of a UE even if the UE operates in a disconnected mode.

Typically, a data connection between the UE and the network is not set up in the disconnected mode. Examples of disconnected mode include: idle mode; wake-up mode; power-save mode; etc. It is possible that a registry entry of the UE is maintained at the network while the UE operates in the disconnected mode. Typically, it may not be possible or only possible to a limited degree to communicate payload data - e.g., data associated with an application layer of a transmission protocol stack - between the UE and the network while the UE operates in disconnected mode. Then, if there is data to be transmitted between the network and the UE, it may be possible to page the UE. For this, a paging signal or wake-up signal may be employed. A data communication may be set up in order to transition operation of the UE from the disconnected mode to the connected mode. In this connection, it is possible to employ a random access procedure.

Such techniques of monitoring connectivity of the UE across different operation modes of the UE may be beneficial, in particular, when being applied to M2M, IOT, V2V or V2x scenarios. In particular, for such use cases, it is expected that the overall amount of data to be communicated between the respective UE and the network is comparably limited; however, if there is in fact data to be communicated between the UE and the network, this should typically occur at a high reliability and low latency. Hence, it is possible that in such use cases, the respective UEs operate in the disconnected mode over an extended duration of time, e.g., in more than 70% or 80% or even 95% of the overall operational time. Hence, by means of the techniques described herein, it is possible to monitor the connectivity of the UEs even when they operate in disconnected mode. This is an advantage if compared to conventional channel sounding techniques where in connected mode pilot signals are communicated between the network and the UE.

By means of at least some of the techniques described herein, it is possible to inform an application layer of the transmission protocol stack if limited connectivity is experienced. The application layer may take appropriate countermeasures. Alternatively or additionally, countermeasures may be taken by the network. Such countermeasures may help to increase connectivity of the UE and/or to mitigate negative impact of the limited connectivity on one or more applications implemented by the UE and the network.

According to examples, a UE receives at least one downlink (DL) signal which is transmitted by a base station (BS) of the network. The UE receives the at least one DL signal while the UE operates in a disconnected mode. Hence, the BS transmits the at least one DL signal while the UE operates in the disconnected mode. Here, the data connection is not set up between the UE and the network. Then, the UE may determine a receive property of the at least one DL signal and may then transmit, to the network, an uplink (UL) report signal which is indicative of the receive property. The BS may receive the UL report signal. In response to said receiving of the UL report signal, one or more countermeasures for facilitating the connectivity with the UE may be selectively triggered, e.g., by taking into account the receive property.

By receiving the at least one DL signal even while operating in the disconnected mode, it is possible to monitor the connectivity of the UE while operating in the disconnected mode based on the respective receive property of the at least one DL signal. This helps to monitor connectivity over an extended duration of time.

The UL report signal may be transmitted by the UE while the UE operates in disconnected mode or while the UE operates in connected mode. Likewise, the UL report signal may be received by the BS while the UE operates in disconnected mode or while the UE operates in connected mode.

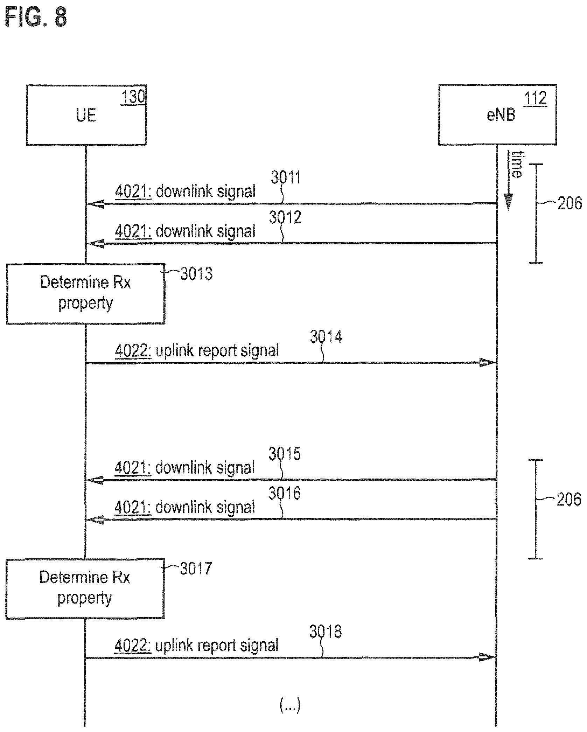

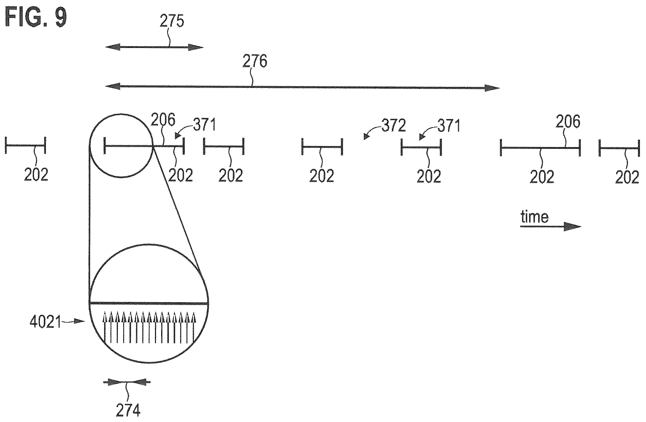

Depending on the connectivity, it would be possible to trigger one or more countermeasures. For example, if the network identifies limited connectivity - e.g., if a negotiated reachability level cannot be sustained -, the network and notify the UE. The UE may then provide this information on the limited connectivity to a higher layer such as the application layer. The claimed invention corresponds to fig. 8, 9 and to the related text in the description. The remaining figures and the text of the description are intended to better explain the invention.

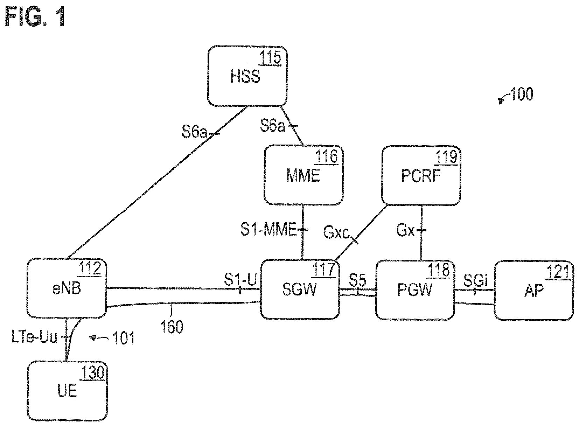

FIG. 1 illustrates aspects with respect to the architecture of a cellular network 100 according to some examples implementations. In particular, the cellular network 100 according to the example of FIG. 1 implements the 3GPP LTE architecture, sometimes referred to as evolved packet system (EPS). This, however, is for exemplary purposes only. In particular, various scenarios will be explained in the context of a wireless link 101 between a UE 130 and the cellular network 100 operating according to the 3GPP LTE radio access technology (RAT) for illustrative purposes only. Similar techniques can be readily applied to various kinds of 3GPP-specified RATs, such as Global Systems for Mobile Communications (GSM), Wideband Code Division Multiplex (WCDMA), General Packet Radio Service (GPRS), Enhanced Data Rates for GSM Evolution (EDGE), Enhanced GPRS (EGPRS), Universal Mobile Telecommunications System (UMTS), and High Speed Packet Access (HSPA), and corresponding architectures of associated cellular networks. The network 100 may be operating according to the 3GPP NR framework. A further particular example is the 3GPP NB-IoT RAT. The 3GPP NB-IoT RAT may be based on the 3GPP LTE RAT, i.e., the Evolved UMTS Terrestrial Radio Access (E-UTRA). Further, the NB-IoT RAT may be combined with the EPS as illustrated in FIG. 1. The various examples disclosed herein may be readily implemented for the 3GPP NB-IoT RAT, alternatively or additionally. Similarly, the techniques described herein may be employed for MTC. Other examples include other types of networks, e.g., Institute of Electrical and Electronics Engineers (IEEE) 802.11X Wireless Local Area Network, Bluetooth or Zigbee.

The 3GPP LTE RAT implements a HARQ protocol. The HARQ protects data communicated via the wireless link 101. FEC and retransmission are employed in this respect.

The UE 130 is registered to the network 100. In the example of FIG. 1, the UE 130 is connected to the network 100 via the wireless link 101 to a BS 112 of the cellular network 100. The BS 112 and the UE 130 implement the evolved UMTS terrestrial radio access technology (E-UTRAN); therefore, the BS 112 is labeled evolved node B (eNB) in FIG. 1. In other examples, the UE 130 may be registered to the network 100, but no active data connection may be maintained.

For example, the UE 130 may be selected from the group including: a smartphone; a cellular phone; a table; a notebook; a computer; a smart TV; a MTC device, an IoT device; a sensor; an actuator; etc.

An MTC or IoT device is typically a device with a low to moderate requirement on data traffic volumes and loose latency requirements. Additionally, communication employing MTC or IoT devices should achieve low complexity and low costs. Further, energy consumption of an MTC or an IoT device should be comparably low in order to allow battery-powered devices to function for a comparably long duration: The battery life should be sufficiently long. For example, the IoT device may be connected to the EPS via the NB-IoT RAT.

Communication on the wireless link 101 can be in UL and / or DL direction. The BS 112 is connected with a gateway node implemented by a serving Gateway (SGW) 117. The SGW 117 may route and forward payload data and may act as a mobility anchor during handovers of the UE 130.

The SGW 117 is connected with a gateway node implemented by a packet data network Gateway (PGW) 118. The PGW 118 serves as a point of exit and point of entry of the cellular network 110 for data towards a packet data network (PDN; not shown in FIG. 1): for this purpose, the PGW 118 is connected with an access point node 121 of the packet data network. The access point node 121 is uniquely identified by an access point name (APN). The APN is used by the UE 130 to seek access to the packet data network.

The PGW 118 can be an endpoint of an data connection 160 for packetized payload data of the UE 130. The data connection 160 may be used for communicating payload data of a particular service. Different applications/services may use different data connections 160 or may share, at least partly, a certain data connection.

In a 3GPP NR scenario, the SGW 117 and PGW 118 functionality may be implemented by a user plane function (UPF).

The data connection 160 may be implemented by one or more bearers which are used to communicate service-specific data. An EPS bearer which is characterized by a certain set of quality of service parameters indicated by the QoS class identifier (QCI). The data connection may be, at least partly, defined on a Layer 2 or Layer 3 of a transmission protocol stack implemented by the BS 112 and the UE 130 for communicating on the wireless link 101. For example, in connection with the 3GPP LTE E-UTRAN, the data connection 160 may be implemented on the Radio Resource Control (RRC) layer.

A control layer of the core network includes a mobility management entity (MME) 116. The MME 116 functionality may be implemented by a Access and Mobility Management Function (AMF) and the Session Management Function (SMF) in a 3GPP NR framework.

The MME 116 handles mobility and security tasks such as paging and access credentials. The MME 116 also keeps track of the operational mode of the UE 130, e.g., whether the UE 130 operates in connected or disconnected mode. The MME 116 is the termination point of the non-access stratum (NAS) connection, i.e., a control connection implemented on the layer above the RRC layer.

A home subscriber server (HSS) 115 includes a repository that contains user- and subscriber-related information such as authentication and subscription information. In 3GPP NR, such functionality may be implemented by the Authentication Server Function (AUSF) and/or the Unified Data Management (UDM) functionality.

A Policy and Charging Rules Function (PCRF) implements policy control to thereby facilitate a certain QoS. The respective function is implemented by the Policy Control Function (PCF) in the 3GPP NR framework.

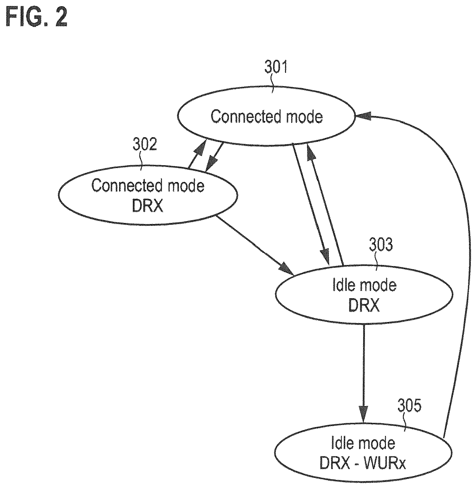

FIG. 2 illustrates aspects with respect to different modes 301-303, 305 in which the UE 130 can operate. In all states illustrated in FIG. 2, the UE 130 may be registered with the network 100, i.e., may be EMM-REGISTERED in 3GPP LTE or MM-REGISTERED in 3GPP NR. Thus, a corresponding entry may be kept at the MME 116. The network 100 may page the UE 130.

In connected mode 301, the data connection 160 is set up. For example, a default bearer and optionally one or more dedicated bearers may be set up between the UE 130 and the network 100.

In order to reduce the power consumption, it is then possible to transition from the connected mode 301 to a connected mode 302 which employs a discontinuous reception (DRX) cycle (Connected mode DRX).

The DRX cycle includes on durations and off durations (not illustrated in FIG. 2). During the off durations, an interface of the UE 130 is unfit to receive data; e.g., an analog and/or digital frontend may at least be partially powered down. The timing of the DRX cycle is synchronized between the UE 130 and the BS 112 such that the BS 112 can align any DL transmission with the on durations of the connected mode DRX cycle. The data connection 160 is maintained established in mode 302 even during the off durations. The data connection 160 is not released.

To achieve a further power reduction, it is possible to transition into one or more disconnected modes 303, 305. Here, the data connection 160 is released and not set up.

One example of a disconnected mode 303, 305 is the idle mode 303. The idle mode 303 is, again, associated with an idle mode DRX cycle of the UE 130. However, during the on durations of the DRX cycle in idle mode 303, the interface of the UE 130 is only fit to receive paging messages on the channel 261. For example, this may help to restrict the frequency bandwidth that needs to be monitored by the UE during the on durations of the DRX cycles in idle mode 303. This may help to further reduce the power consumption - e.g., if compared to the connected mode 302.

For example, when transitioning from the connected mode 301 to the idle mode 303, it would be possible to release the data connection 160.

A further example of a disconnected mode is the wake-up mode 305; here, instead of paging signals wake-up signals may be received, e.g., by a dedicated low-power receiver of the UE 130.

FIG. 2 is an example scenario only. In other examples fewer, more, or different modes may be used. For example, in the 3GPP NR context, a RRC-INACTIVE CONNECTED mode may be used, see 3GPP (Technical Report) TR 23.799, Study on Architecture for Next Generation System, V.1.2.1 (Nov. 2016). Here, the UE keeps parts of the RAN context; these parts remain valid when re-connecting to the network. Such parts may include the Access Stratum (AS) security context, UE capability information, etc..

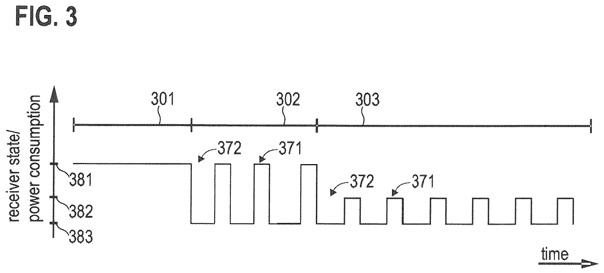

FIG. 3 illustrates aspects with respect to transitioning between the different modes 301 - 305. Furthermore, FIG. 3 illustrates aspects of employing DRX cycles.

First, the UE 130 operates in the connected mode 301. This causes a persistent power consumption at a high level. The interface of the UE 130 is in an active state 381.

Then, in order to reduce the power consumption, the connected mode 302 employing DRX is activated. Here, the on durations 371 and the off durations 372 of the DRX cycle are illustrated. During the off durations 372, the interface 1301 is in an inactivate state 383 in which it is unfit to receive signals and to transmit signals. The inactive state 383 is associated with a low energy consumption.

To further reduce the power consumption, next, the idle mode 303 is activated. This is accompanied by releasing the data connection 160. Again, the idle mode 303 employs a DRX cycle including on durations 371 and off durations 372. The on durations 371 in mode 303 are associated with a lower power consumption if compared to the on durations 371 in connected mode 302, because in the idle mode 303, the capability of the interface can be reduced if compared to the connected mode 302. Thus the interface of the UE 130 operates in a power-save state 382 during the on durations 371. During idle mode 303, the receiver of the interface may only expect reception of paging signals. This may help to restrict the bandwidth and / or restrict the need for complex demodulation functionality.

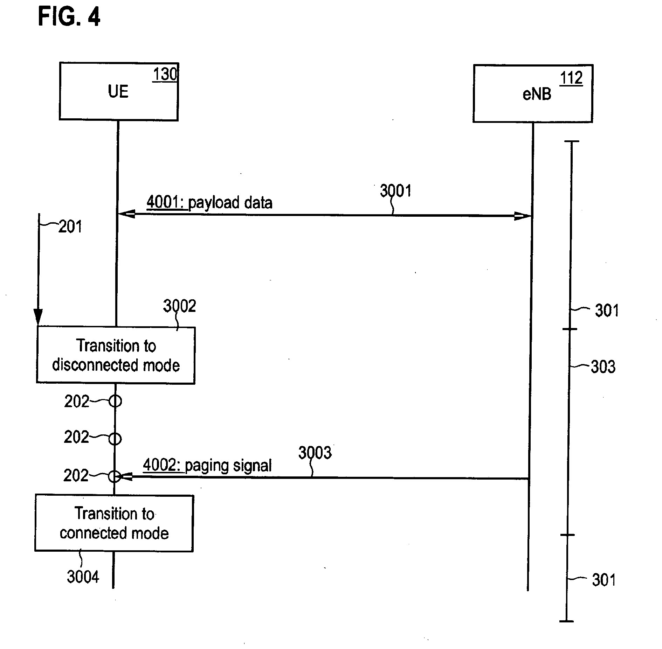

FIG. 4 illustrates aspects with respect to transitioning between operation in the connected mode 301 and in the idle mode 303. FIG. 4 is a signaling diagram schematically illustration communication between the UE 130 and the BS 112.

First, payload data 4001 is communicated at 3001. For example, UL payload data 4001 and/or DL payload data 4001 may be communicated. For communicating the payload data 4001, the data connection 160 is employed. The UE 130 operates in connected mode 301.

The payload data 4001 may be associated with one or more applications implemented on an application layer of a transmission protocol stack implemented by the UE 130 and the BS 112 for communicating on the wireless link. For example, the payload data 4001 may be latency-sensitive.

Then, there is no more payload data 4001 to be communicated, i.e., the respective transmission /reception buffers of the UE 130 and/or the BS 112 are empty. A corresponding timer 201, sometimes referred to as inactivity timer, is triggered upon concluded communication of the payload data 4001 at 3001. Upon expiry of the inactivity timer 201, a transition to idle mode 303 occurs at 3002. At 3002, the data connection 160 is released.

In idle mode 303, the UE 130 remains registered at the network 100. For example, the MME 116 maintains a respective entry of the identity of the UE 130 and/or of the identity of the subscriber associated with the UE 130. This facilitates paging of the UE 130, e.g., if there is DL data to be transmitted from the network 100 to the UE 130.

There are paging occasions 202 defined at which the UE 130, according to the respective DRX cycle, listens for paging signals 4002. For example, the paging occasions 202 may be coincident with the on durations 371 of the DRX cycle. For example, the UE 130 can time-align the DRX cycle with the paging occasions 202. For example, the UE 130 may receive broadcasted information to obtain fraim numbering and time synchronization with the cell. Then, the UE may calculate when the paging occasions will occur, e.g., by using the DRX cycle length and other frame timing information available. The paging occasion may be a function of the UE identity, e.g., the International Mobile Subscriber Identity (IMSI); thereby, different UEs may use different paging occasions. Once the UE 130 has obtained knowledge on the paging occasions 202 - e.g., the time in-between subsequent paging occasions 202 - the appropriate DRX cycle may be selected. Thereby, it can be ensured that the on durations 371 of the DRX cycle are synchronized with the paging occasions 202.

As illustrated in FIG. 4, eventually, the network 100 makes a paging attempt; therefore, the BS 112 transmits a paging signal 4002 at 3003. In response to receiving the paging signal 4002 with the respective paging occasions 202, the UE 130 transitions into operating in the connected mode 301, 3004. This transition may involves a random access procedure and a RRC setup procedure for setting up the data connection 160.

While in the example of FIG. 4 the transition to the connected mode 301 is in response to receiving the paging signal 4002, in other examples, the UE 130 may proactively trigger the transition to the connected mode 301, e.g., in response to a need to transmit UL payload data.

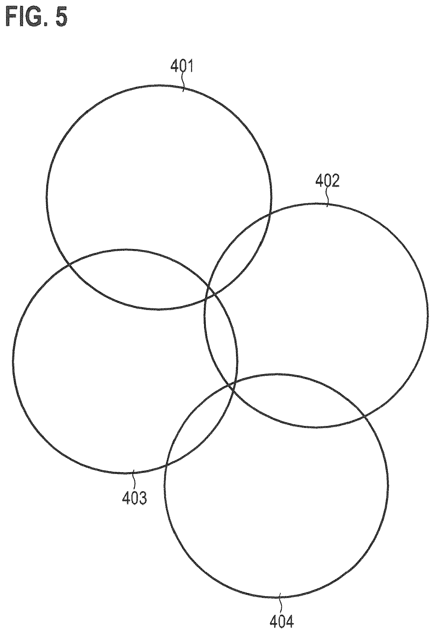

FIG. 5 illustrates aspects with respect to mobility of the UE 130. FIG. 5 illustrates multiple cells 401 - 404 of the cellular network 100. The different cells 401 - 404 are associated with one or more BSs (not illustrated in FIG. 5). The cells 401 - 404 form a tracking area. Hence, if the network 100 attempts to page the UE 130 in the idle mode 303, paging signals 4002 may be transmitted by the various BSs of the cells 401 - 404 of the tracking area.

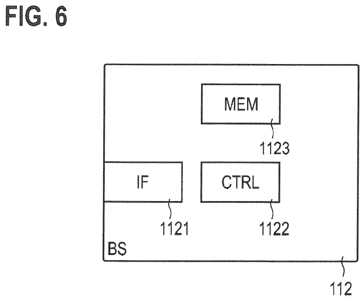

FIG. 6 schematically illustrates the BS 112 in greater detail. The BS 112 includes an interface 1121. The interface 1121 is configured to wirelessly transmit and/or receive (communicate) signals on the wireless link 101. The interface may include an analog front end, a digital front end, one or more antennas, etc. The BS 112 also includes control circuitry 1122, e.g., implemented by one or more processors, in hardware and/or software. The BS 112 also includes a memory 1123, e.g., a non-volatile memory. It is possible that program code is stored by the memory 1123. The program code may be executed by the control circuitry 1122. Executing the program code may cause the control circuitry 1122 to perform techniques as described herein in connection with, e.g., transmitting one or more DL signals; receiving a UL report signal; triggering one or more countermeasures if limited connectivity of the UE is identified; etc..

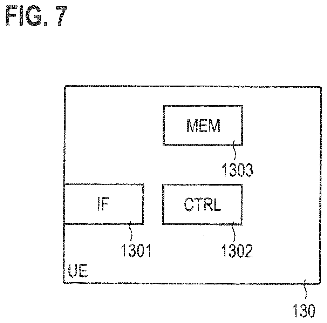

FIG. 7 schematically illustrates the UE 130 in greater detail. The UE 130 includes an interface 1301. The interface 1301 is configured to wirelessly communicate signals on the wireless link 101. The interface may include one or more receivers, e.g., a main receiver and a wake-up receiver. The wake-up receiver may be configured to selectively receive wake-up signals, e.g., using a lower-or the modulation, limited frequency bandwidth, etc.. The interface 1301 may include an analog front end, a digital front end, one or more antennas, etc. Transmit and/or receive beamforming is possible. The UE 130 also includes control circuitry 1302, e.g., implemented by one or more processors. The UE 130 also includes a memory 1303, e.g., a non-volatile memory. It is possible that program code is stored by the memory 1303. The program code may be executed by the control circuitry 1302. Executing the program code may cause the control circuitry 1302 to perform techniques as described herein in connection with, e.g., receiving one or more DL signals while operating in a disconnected mode; transmitting a UL report signal; triggering one or more countermeasures if limited connectivity of the UE is identified; informing upper layers of a transmission protocol stack of the limited connectivity; etc.

FIG. 8 is a signaling diagram schematically illustrating communication between the UE 130 and the BS 112. First, at 3011 and 3012, DL signals 4021 are transmitted by the BS 112 and received by the UE 130.

At 3011 and 3012, the UE 130 operates in a disconnected mode 303, 305. For example, the UE 130 may be operating in idle mode 303 when receiving the DL signals 4021 at 3011 and 3012. For example, the data connection 160 may have been previously released, e.g., due to expiry of an inactivity timer 201 (cf. FIG. 4). Then, the DL signals 4021 may be received in response to releasing the data connection 160.

In the various examples described herein, different DL signals 4021 may be used when monitoring the connectivity of the UE 130. Examples of DL signals 4021 that may be used include, but are not limited to: system information block; synchronization signal; paging signal directed to the UE 130; paging signaled directed to a number UE different from the UE 130; a cell-specific reference signal; a BS antenna specific reference signal; and a broadcasted signal.

For example, system information blocks may be broadcasted by the BS 112 at a comparably high repetition rate. Examples of sets system information blocks include the Master Information Block (MIB) and the Secondary Information Block (SIB) in the 3GPP LTE framework. Information blocks may be received by UEs operating in a disconnected mode prior to performing a random access procedure for setting up the data connection 160. In particular, information blocks may include configuration data that is required for appropriately setting up the data connection 160. Example configuration data that may be included in the information blocks includes, but is not limited to: a cell identity; a frequency bandwidth employed by the BS; access barring information; an operator associated with the cell; etc.

The synchronization signal may be used in order to define a mutual time reference between the UE 130 and the BS 112.

Paging signals can be used to trigger a connection attempt of the UE 130 or of a different UE to the network. The paging signals may be UE specific. The paging may be triggered by the MME 116. The paging may be based on the registration of the UE 130 at the network 100.

Cell-specific and/or antenna specific reference signals can be used in order to perform channel sounding.

Thus, as will be appreciated, a wide variety of different DL signals 4021 may be used in the various examples described herein. In particular, will be appreciated from the above, certain DL signals that are anyway transmitted for another purpose - e.g., facilitating random access, time synchronization, channel sounding, etc. - may be reused for the purpose of monitoring the connectivity of the UE 130 while the UE is in a disconnected mode. This reduces or avoids additional signaling overhead. Generally, the DL signals used in connection with monitoring the connectivity may be dedicated to the UE 130 or may not be dedicated to the UE 130. It would be even possible that the DL signals used for monitoring the connectivity are dedicated to one or more different UEs. Then the UE 130 may eavesdrop on these DL signals that are directed to one or more different UEs for the purpose of monitoring the connectivity - this may be possible, because in some examples it may not even be required to demodulate and decode the DL signals, e.g., if the receive property relates to a signal level.

Then, at 3013, the UE 130 determines receive properties of the DL signals 4021 received at 3011 and 3012. At 3014, the UE transmits an UL report signal 4022 which is indicative of the receive property as determined in 3013.

In the various examples described herein, different kinds of types of receive properties may be employed. In the invention, a signal strength, signal-to-noise ratio, an error rate of decoding a plurality of DL signals 4021, or (not in the invention) a decoding reliability may be considered

This receive property may then be stored, for further use in connection with an UL report signal.

For example, determining the receive property may or may not include decoding and/or demodulation of the DL signals 4021. For example, if the UE 130 eavesdrops on DL signals 4021 directed to one or more other UEs 130, the UE may not even be capable to decode and/or demodulate the DL signals 4021, e.g., because appropriate configuration data and/or credentials are missing. In such scenarios, the signal strength or signal-to-noise ration may be considered. The signal strength may define the amplitude of the signal at an analog stage of the receiver. The signal-to-noise ratio may define the amplitude of the signal at the analog stage if compared to a background level prior to and after the signal.

The decoding reliability may define the degree of confidence with which a certain decoder, e.g., a Viterbi decoder, outputs decoded data. Decoding may be combined with demodulation.

The error rate may be a bit error rate (BER) or block error rate (BLER) or a packet error rate (PER).

The BS 112 receives the UL report signal 4022. Based on the UL report signal 4022, the BS 112 may judge whether the connectivity of the UE 130 is limited. This is possible even though the UE 130 operates in idle mode 303 or, generally, another disconnected mode when receiving the DL signals 4021 at 3011 and 3012.

Based on the receive properties of the DL signals 4021, it may be possible to determine whether the connectivity is limited. For example, if the receive properties indicate reduced reliability of the reception, a limited connectivity may be assumed.

While in the example of FIG. 8, the UE 130 receives two DL signals 4021 at 3011 and 3012, generally, the UE 130 may receive a smaller or larger number of DL signals 4021 before determining the receive property and transmitting a respective UL report signal 4022.

Illustrated in FIG. 8 is a scenario in which the connectivity of the UE 130 is continuously monitored. Hence, at 3015 and 3016, the UE 130, again, receives DL signals 4021; at 3017, the UE 130, again, determines the receive property and transmits the respective UL report signal 4022 at 3018. This process may be repeated from time to time; the time offset between subsequent UL report signals 4022 being transmitted by the UE 130 may correlate with a time resolution with which the connectivity of the UE 130 can be monitored.

Reception of the DL signals 4021 by the UE 130 occurs in receive timeslots 206 of a repetitive probing schedule. For example, a frequency of occurrence of the receive timeslots 206 may be set such that energy consumption by receiving the DL signals 4021 on the one hand side, and time resolution of monitoring the connectivity of the UE 130 are balanced.

The receive timeslots 206 are intermittedely arranged. A strict periodicity of the receive timeslots 206 is not required.

For example, it is possible that the frequency of occurrence of the receive timeslots 206 is aligned with the typical mobility pattern expected for the UE 130: For example, it would be possible that the frequency of occurrence of the subsequent receive timeslots is in the range of 1 - 60 seconds, optionally in the range of 3 - 30 seconds. This frequency of occurrence of the receive timeslots 206 may correlate with the time offset between subsequent receive timeslots 206. It has been observed that by setting the receive timeslots 206 such that they have a respective frequency of occurrence, a favorable balance between energy consumption on the one hand side and time resolution of monitoring the connectivity of the UE 130 can be obtained; this is because the connectivity may vary on a timescale associated with the typical mobility pattern.

FIG. 9 illustrates aspects with respect to the repetitive probing schedule. FIG. 9 also illustrates aspects with respect to paging occasions 202 while the UE 130 is operating in idle mode 303. FIG. 9 also illustrates aspects with respect to the DRX cycle including on durations 371 and off durations 372: the paging occasions 202 are implemented by the on durations 371.

As illustrated in FIG. 9, the repetitive probing schedule is time-aligned with the DRX cycle. Hence, the receive timeslots 206 of the repetitive probing schedule are at least partially overlapping with the on durations 371 of the DRX cycle. In other words, the receive timeslots 206 of the repetitive probing cycle are coincident in time domain with the paging occasions 202.

In the scenario of FIG. 9, not every on duration 371 of the DRX cycle implements a receive timeslot 206 of the repetitive probing schedule. In particular, the receive timeslots 206 of the repetitive probing schedule are defined as integer multiples of the on durations 371 of the DRX cycle (in the non-limiting example of FIG. 9, every fourth on duration 371 is at least partially overlapping with the respective receive timeslot 206 of the repetitive probing cycle).

Thus, as illustrated in FIG. 9, the frequency of occurrence of the receive timeslots 206 of the repetitive probing schedule defines a time offset 276 between adjacent receive timeslots 206 which is larger by a certain factor (factor of 4 in the non-limiting example of FIG. 9) than the respective time offset 275 between adjacent on durations 371 of the DRX cycle.

For example, the duration of the receive timeslots 206 may be extended if compared to the duration of the on durations 371 of the DRX cycle which are not at least partially overlapping with the receive timeslots 206. Therefore, by implementing a reduced frequency of occurrence for the receive timeslots of the repetitive probing cycle if compared to the on durations of the DRX cycle, energy consumption can be reduced. In a further example, the bandwidth which is used for receiving the DL signals 4021 in the receive timeslots 206 may be extended if compared to the bandwidth which is used for receiving any potential paging signals in the paging occasions 202 of the on durations 371 of the DRX cycle. Thereby, by implementing a reduced frequency of occurrence for the repetitive probing cycle if compared to the DRX cycle, energy consumption can be reduced.

As will be appreciated from FIG. 9, the interface 1301 - and, in particular, the receiver of the interface 1301 - of the UE 130 is transitioned between the inactive state 383 and the power-save state 382 in accordance with the repetitive probing cycle (cf. FIG. 3). This is due to the receive timeslots 206 being arranged intermittedly.

The DL signals 4021 may be communicated according to a fixed, pre-defined schedule. This may correspond to "pinging" the UE with a certain frequency of occurrence to ensure that the connectivity is not limited, e.g., if DL signals 4021 directed to the UE 130 are employed. For example, certain time-frequency resource elements may be allocated to the DL signals 4021. For example, information blocks broadcasted by the BS 112 may be fixedly allocated to certain time-frequency resource elements of a time-frequency resource grid. Thereby, also the repetition rate of communicating the DL signals 4021 is well-defined.

In FIG. 9, a scenario is illustrated where the time offset 274 between adjacent DL signals 4021 is much smaller than the time offsets 275, 276 (illustrated in the magnified in set of FIG. 9). For example, if the DL signals 4021 used when monitoring the connectivity of the UE 130 are implemented by information blocks, then such information blocks may be repeated on frame or even subframe level of the wireless link 101. Hence, the repetition rate of the information blocks may be in the order of tens of milliseconds. Generally, the repetition rate of communication of the DL signals 4021 may be larger than the frequency of occurrence of the receive timeslots 206, e.g., at least by a factor of 100, further optionally at least by a factor of 1000. Such a scenario may ensure that whenever a receive timeslot 206 is scheduled, there are sufficient opportunities for receiving a DL signal 4021 available.

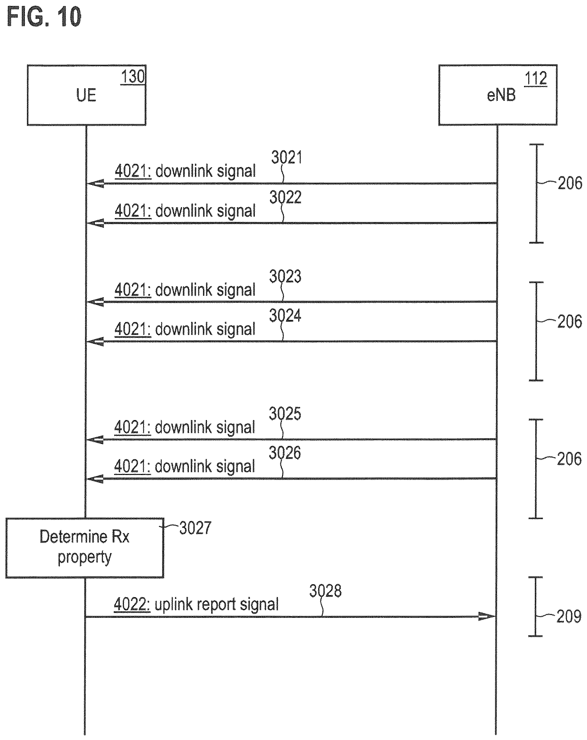

FIG. 10 is a signaling diagram illustrating communication between the UE 130 and the BS 112. The example of FIG. 10 generally corresponds to the example of FIG. 8. In the example of FIG. 10, a larger count of DL signals 4021 is received at 3021 - 3026, prior to transmitting the UL report signal 4021 at 3028. At 3027, the receive property is determined for the DL signals 4021 previously received. By receiving a larger count of DL signals 4021 per UL report signal 4022, the control signaling overhead can be reduced. For example, a count of at least 10 or at least 100 or at least 1000 DL signals 4021 could be received per UL report signal 4022.

Further, in various scenarios it would be possible that the UL report signal 4022 does not include information indicative of the individual receive properties of each and every DL signal 4021; but rather includes information indicative of a combined receive property across the received DL signals 4021. In other words, it would be possible that the receive property includes statistics of said receiving of the plurality of DL signals 4021. By indicating statistics on the receiving of a plurality of DL signals 4021, on the one hand side, a reliable monitoring of the connectivity of the UE 130 becomes possible. In particular, one-time exceptions or off-trend behavior of the connectivity of the UE 130 can be put into relation by considering that statistics. Further, by including the information indicative of the statistics of the receiving of the plurality of DL signals 4021, the overall amount of data to be included in the UL report signal 4022 may be reduced; thereby, control signaling overhead on the wireless link 101 may be reduced.

Example statistics include the number of successful and/or unsuccessful reception attempts of the DL signals 4021. For example, the unsuccessful reception attempts may be defined as such reception attempts with the signal-to-noise ratio of the DL signal 4021 at the receiver of the UE 130 is below a threshold. Alternatively or additionally, the unsuccessful reception attempts may be defined as such reception attempts which do not allow for a successful decoding of data encoded by the DL signal 4021. It has been found that the number of unsuccessful reception attempts is an accurate measure for the connectivity of the UE 130.

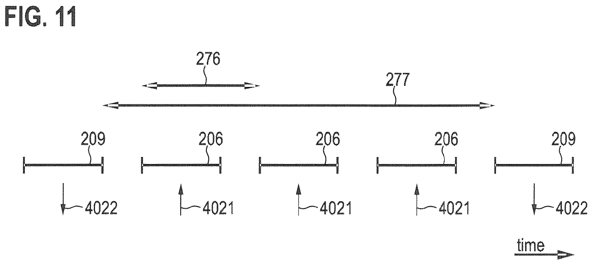

FIG. 10 also illustrates aspects with respect to a repetitive reporting schedule. In particular, the UL report signals 4022 are transmitted and/or received (communicated) in accordance with a repetitive reporting schedule. As illustrated in FIG. 10, the repetitive reporting schedule defines transmit timeslots 209 during which the UL report signals 4022 are communicated. This is also illustrated in connection with FIG. 11.

FIG. 11 illustrates aspects with respect to the repetitive reporting schedule. FIG. 11 illustrates a time arrangement of the receive timeslots 206 of the repetitive probing schedule and of the transmit timeslots 209 of the repetitive reporting schedule. As illustrated in FIG. 11, the time offset 277 between adjacent transmit timeslots 209 is larger than the time offset 276 between adjacent receive timeslots 206. This resembles the observation that in various scenarios it is possible to include information on the receive properties of a plurality of DL signals 4021 in each UL report signal 4022, e.g., by considering the statistics on said receiving of the plurality of DL signals 4021. Hence, to accumulate sufficient information on the receive properties, it is possible to dimension the time offset 277 to be larger than the time offset 276. For example, a typical length/duration of the time offsets 277 may be in the order of 30 seconds - 30 minutes, optionally in the range of 2 minutes - 20 minutes.

Alternatively or additionally to employing the repetitive reporting schedule, an UL report signal 4022 may be transmitted in the various examples described herein if reception attempts for a certain number of DL signals 4021 have been completed, and/or upon demand by the network, and/or if the data connection, and/or if a significance of statistics on the receive properties of a plurality of DL signals 4021 exceeds a threshold, etc..

In the various examples described herein, different techniques are conceivable for transmitting the UL report signal 4022. For example, it would be possible that for transmitting the UL report signal 4022 a random access procedure is performed and the data connection 160 is set up. Then, it is possible to transmit the UL report signal using the data connection 160. Here, it may be desirable to avoid inefficient and overhead-expensive setting up of the data connection 160 by accumulating information on the receive properties of a comparably large count of DL signals 4021 before transmitting the UL report signal 4022. Hence, it may be possible that the frequency of occurrence of the transmit timeslots 209 is dimensioned to be comparably small. Alternatively or additionally, it would also be possible to re-use a data connection 160 that is anyway set up due to other reasons, e.g., for transmitting a tracking area update message.

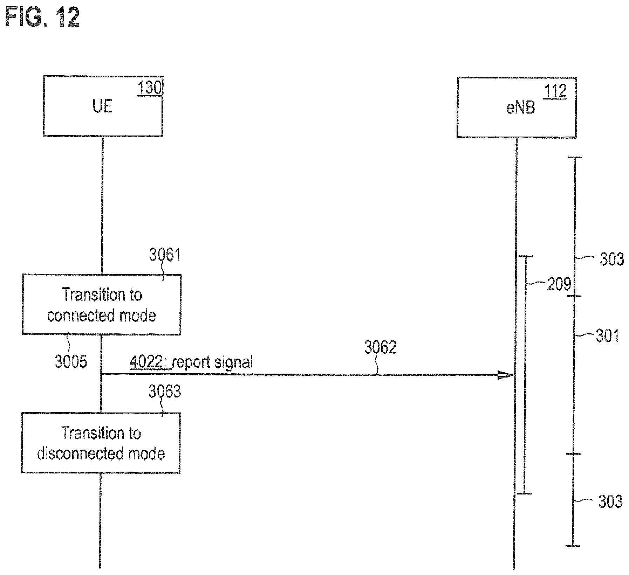

At the same time, the data connection 160 may also be quickly released in response to communication of the UL report signal 4022. In particular, the data connection 160 may be released by overriding the inactivity timer 201 (cf. FIG. 4). Thereby, battery consumption of the UE 130 can be reduced. Such a scenario is illustrated in FIG. 12.

FIG. 12 is a signaling diagram illustrating communication between the UE 130 and the BS 112. FIG. 12 schematically illustrates such a setup of the data connection 160 between the UE 130 and the network 100 for transmitting the UL report signal 4022 at 3062.

At 3061, a transition to the connected mode 301, 302 is performed. This may include setting up the data connection 160, e.g., by performing a random access procedure and a RRC setup procedure. Then, at 3062, the UL report signal 4022 is transmitted using the previously set-up data connection 160. Then, in response to transmitting the UL report signal 4022 at 3062, at 3063, a transition to the disconnected state, e.g., the idle mode 303 is performed. The inactivity timer 201 is not implemented (cf. FIG. 4). This helps to minimize the duration of the timeslot 209.

3061 may be triggered by occurrence of the timeslot 209. However, in other scenarios, other trigger criteria may be used for 3061. For example, to further reduce battery consumption and signaling overhead on the wireless link 101, it would be possible that the data connection 160 used for transmitting the UL report signal 4022 is set up in response to the need of communicating a tracking area update message. In particular, from time to time, while the UE 130 is operating in idle mode 303, the UE may transmit a tracking area update message. The tracking area update message may be indicative of whether the UE is still located in the same tracking area (cf. FIG. 5); or whether the UE 130 has moved into a different tracking area. Based on the tracking area update message, the network 100 can implement the paging of the UE 130. For example, a typical frequency of occurrence of transmitting the tracking area update message may be in the order of 30 minutes; and, hence, may be suitable for synchronization with the transmit timeslots 209.

As will be appreciated from the above, a time resolution with which the connectivity of the UE 130 can be monitored correlates with the frequency of occurrence of the transmit timeslots 209. Therefore, in some scenarios, it may be desirable to implement a lower or higher time resolution by appropriately tailoring the frequency of occurrence of the transmit timeslots 209. In particular, it would be possible that the reporting schedule is set up between the network 100 and the communication device 130, e.g., using an appropriate configuration message. For example, it would be possible that the reporting schedule - and hence, the frequency of occurrence of the transmit timeslots 209 - is set up in accordance with at least one of the device category of the UE 130 and a reliability category associated with the UE 130. This may occur during RRC setup or in connected mode 301, 302.

For example, the device category of the UE 130 may be selected from the following group: handheld device; smart phone; a MTC device; IOT device; vehicle; etc.

For example, the reliability category may specify a level of connectivity that should be implemented for the UE 130. For example, it would be possible that certain UEs require a classification within the higher reliability category than others, e.g., due to the sensitivity or importance of the data communicated between the UE and the network. An example would be sensors or actuators in connected fabrication where it must be ensured with high reliability that each sensor or actuator is quickly reachable.

By taking into consideration the device category and/or the reliability category associated with the UE 130 when configuring the frequency of occurrence of the transmit timeslots 209, it is possible to tailor the accuracy with which the connectivity of the UE 130 can be monitored to the respective needs, e.g., on a per-UE basis. At the same time, excessive control signaling overhead on the wireless link 101 due to repeated connections of the UE 130 to the network 100 can be avoided.

Thus, in some examples, a new UE type may be introduced. This UE type may indicate that the UE needs to be guaranteed application access by the network on a higher performance level then legacy UEs. One implementation for the UE to indicate that it belongs to this new UE type, could be to introduce it as a UE capability. Hence, it is possible that the UE reports its category/capability, e.g., as part of setting up the data connection 160, e.g., as part of a RRC connection procedure. Then, the UE may indicate to the network 100 its higher-reliability access preference. The UE capability may be comparably static or semi-static within the network 100, i.e., the UE 130 may update this capability information, but this is typically not done very often, e.g., on the order of hours or days or even months. The UE capability could also be coupled to a reachability configuration with the UE and the network may negotiate the reachability level that should be provided to the UE 130.

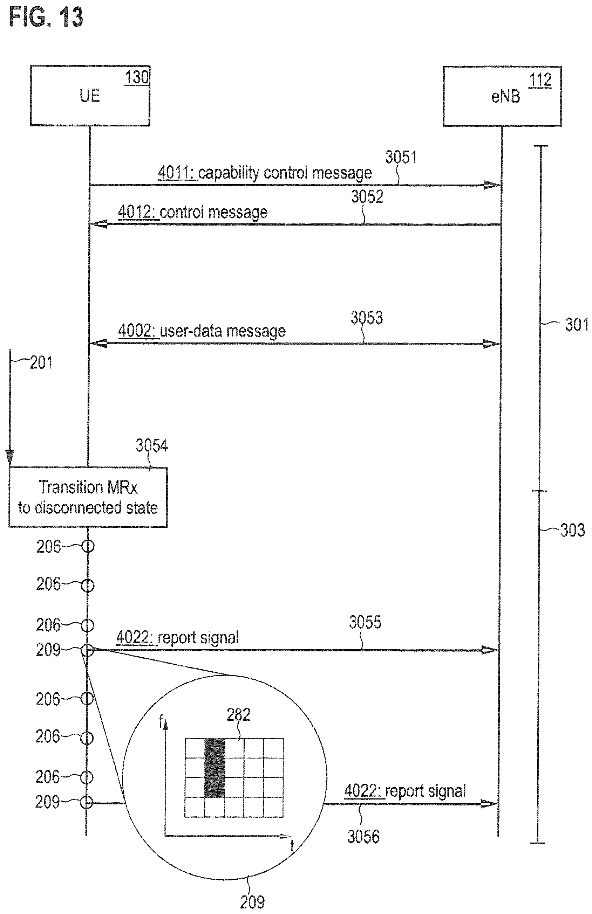

In some examples, the control signaling overhead on the wireless link 101 can be further reduced by specifying certain time-frequency resource elements that can be used by the UE 130 to transmit the UL report signals 4022 while continuously operating in idle mode 303 or, generally, a disconnected mode 303, 305. Then, it is not required to set up the data connection 160 each time the UL report signal 4022 is to be transmitted. Such a scenario is illustrated in connection with FIG. 13.

FIG. 13 illustrates aspects with respect to communicating the UL report signal 4022. FIG. 13 is a signaling diagram schematically illustrating communication between the UE 130 and the BS 112.

Initially, at 3051, a capability control message 4011 is communicated from the UE 130 to the BS 112. The capability control message 4011 is optional. The capability control message 4011 may not only be employed in connection with the scenario as illustrated by FIG. 13, but may alternatively or additionally also be employed in connection with the other scenarios illustrated herein, e.g., in connection with the scenario of figs. 8 or 10.

For example, the capability control message 4011 may be indicative of whether the UE 130 supports receiving the DL signal 4021 while operating in disconnected mode 303, 305. The capability control message 4011 could also be indicative of at least one of the device could category of the UE 130 and the reliability category associated with the UE 130. The capability control message 4011 could be transmitted during RRC setup or using a RRC control message in connected mode 301, 302.

Then, based on such information that may be included in the capability control message 4011, the BS 112 can appropriately allocate time-frequency resource elements 282 to the transmission of the UL report signal 4022. For example, the time offset 277 between adjacent transmit timeslots 209 can be set in accordance with the information included in the capability control message 4011.

These time-frequency resource elements 282 may be dedicated to the UE 130 such that interference or collision by one or more further UEs attempting to transmit on these resources is avoided. The time-frequency resource elements 282 could also be shared between multiple UEs.

At 3052, the BS 112 transmits a DL control message 4012. The DL control message 4012 is optional. The DL control message 4012 may not only be employed in the scenario of FIG. 13, but also in connection with the other examples described herein.

The DL control message 4012 generally includes configuration information for configuring the monitoring of the connectivity. In the example of FIG. 13, the DL control message 4012 is indicative of the time-frequency resource elements 282 scheduled at each transmit timeslots 209 for transmission of the respective UL report signal 4022. As such, the DL control message 4012 may include scheduling information for reoccurring time-frequency resource elements 282. Alternatively or additionally, the DL control message 4012 may also be indicative of the type of DL signal 4021 to be used when monitoring the connectivity of the UE 130. The DL control message 4012 may be, generally, indicative of the repetitive probing schedule and/or the repetitive reporting schedule. The DL control message 4012 may be generally indicative of a codebook for reporting the received property of one or more DL control message 4012 in a compressed format. For example, the DL control message 4012 may be indicative of a threshold of unsuccessful reception attempts which is used when reporting to the network 100. The DL control message 4012 may be indicative of reachability levels, e.g., the probability of missed communication, that is acceptable for the UE 130.

3053 corresponds to 3001. 3054 corresponds to 3002.

Reception of DL signals 4021 is not illustrated in FIG. 13 for sake of simplicity.

At the transmit timeslot 209, the UE 130 uses one of the previously allocated time-frequency resource elements 282 to transmit the UL report signal 4022 at 3055 (the inset of FIG. 13 illustrates a time-frequency resource mapping/grid defined in frequency and time domain and the black-filled time-frequency resource elements which are allocated to the transmission of the UL report signal 4022; the time-frequency resource mapping may be defined by an Orthogonal Frequency Division Multiplexing modulation scheme).

By using previously allocated time-frequency resource elements 282 to transmit the UL report signal 4022 while the UE is operating in idle mode 303 or, generally, in disconnected mode, it becomes possible to avoid frequent re-establishment of the data connection 160 which is generally resource expensive and allocates significant overhead on the wireless link 101. At the same time, the UL report signal 4022 may be transmitted at a comparably high frequency of occurrence such that the accuracy of monitoring the connectivity of the UE 130 is high.

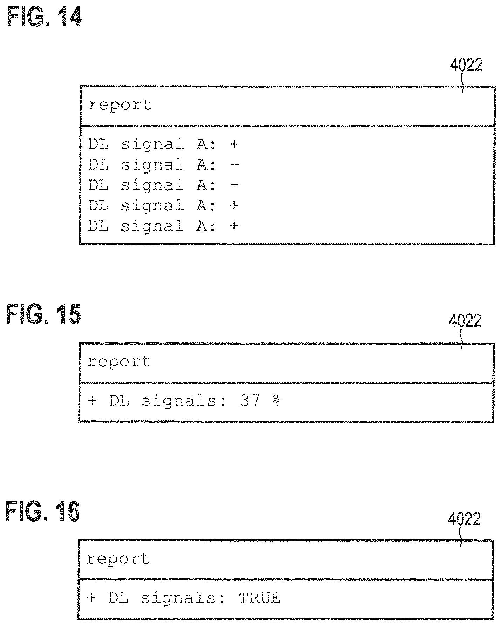

FIG. 14 illustrates aspects with respect to the UL report signal 4022. In the example of FIG. 14, the UL report signal 4022 is indicative of the receive properties for a plurality of previously received DL signals 4021. In particular, the UL report signal 4022 indicates for each one of a plurality of DL signals 4021 if the respective DL signal 4021 has been correctly received ("+" in FIG. 14) or has not been correctly received ("-" in FIG. 14). While the scenario FIG. 14 offers comparably large information depth to be processed by the network 100, also the size of the UL report signal 4022 is comparably large due to individually reporting one each receive DL signal 4021.

FIG. 15 illustrates aspects with respect to the UL report signal 4022. In the example of FIG. 15, the UL report signal 4022 is indicative of statistics of receiving multiple DL signals 4021. In particular, in the example of FIG. 15, the UL report signal 4022 illustrates a ratio of unsuccessful reception attempts of the plurality of DL signals if compared to the total number of reception attempts. For example, the number of unsuccessful reception attempts may be determined based on knowledge of the repetition rate with which the DL signals 4021 are communicated according to a predefined pattern (cf. FIG. 9). The scenario of FIG. 15 reduces the size of the UL report signal 4022 if compared to the scenario FIG. 14.

FIG. 16 illustrates aspects with respect to the UL report signal 4022. In the example of FIG. 16, the UL report signal is indicative of statistics of receiving multiple DL signals 4021. In particular, in the example of FIG. 15, the UL report signal 4022 is indicative of a number of unsuccessful reception attempts of the plurality of DL signals 4021. In this example, the 1-bit UL report signal 4022 is indicative of whether the number of unsuccessful reception attempts is larger or smaller than the predefined threshold. For example, the predefined threshold may be defined in accordance with an initial control message 4012, i.e., as part of a respective codebook (cf. FIG. 13). The scenario FIG. 16 further reduces the size of the UL report signal 4022 if compared to the scenarios of FIG. 14 and 15.

For example, the UL report signal 4022 of FIG. 16 may be selectively transmitted on-demand if limited connectivity is identified, e.g., because the number of unsuccessful reception attempts exceeds the predefined threshold. By such selective transmission of the UL report signal 4022 depending on the receive property of the at least one DL signal 4021, it becomes possible to reduce control signaling overhead on the wireless link 101.

Such a scenario using a 1-bit UL report signal 4022 may be, in particular, desirable when using predefined time-frequency resource elements 282 that are allocated for use by the UE 130 and transmitting the UL report signal what 4022 while operating in a disconnected mode 303, 305. This is because in such a scenario, typically, the overhead imposed on the wireless link 101 is to be reduced due to the number of UEs simultaneously registered with the in a specific cell.

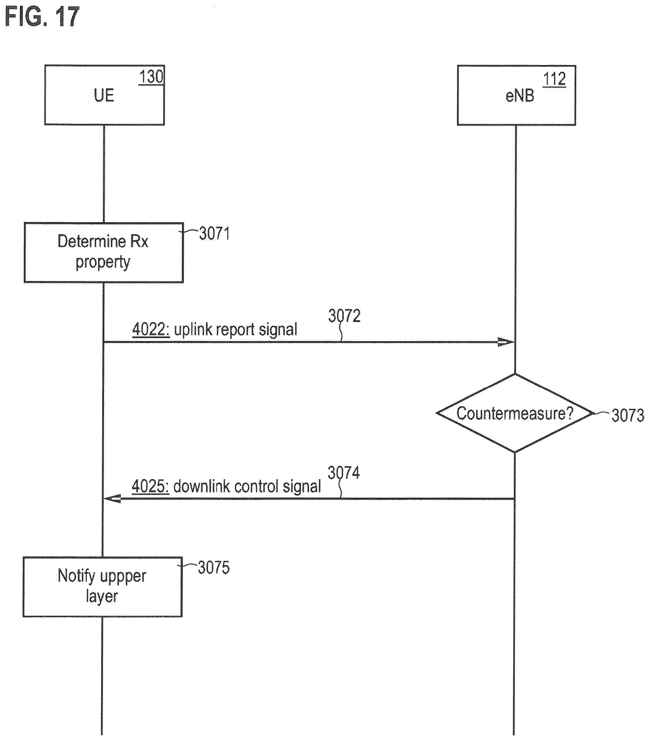

FIG. 17 illustrates aspects with respect to triggering a countermeasure depending on the connectivity of the UE 130. FIG. 17 is a signaling diagram schematically illustrating communication between the UE 130 and the BS 112.

At 3071, the UE 130 determines a receive property of previously received DL signals 4021 (not illustrated in FIG. 17 for sake of simplicity).

Then, at 3072, the UL report signal 4022 is transmitted by the UE 130 and received by the BS 112. For example, the UL report signal 4022 could be communicated using the data connection 160, i.e., by previously setting up the data connection 160 (not illustrated in FIG. 17). Alternatively, it would also be possible that the UL report signal 4022 is communicated using reoccurring time-frequency resource elements 282 without transitioning operation of the UE 130 from the disconnected more 303, 305 to a connected mode 301, 302.

Based on the UL report signal 4022 received at 3072, the BS 112 selectively triggers one or more countermeasures for facilitating the connectivity with the UE 130. Hence, in response to receiving the UL report signal 4022 at 3072, one or more such countermeasures may be triggered or may not be triggered, depending on the connectivity.

Generally, there is a wide range of potential countermeasures conceivable. In the specific example of FIG. 17, the countermeasure includes transmitting a DL control signal 4025 from the BS 112 to the UE 130 at 3074. The DL control signal 4025 is indicative of the limited connectivity of the UE 130. For transmitting the DL control signal 4025, it would be possible that the UE 130 - by means of paging - is transitioned into the connected mode 301, 302 (not illustrated in FIG. 17).

Based on the DL control signal 4025, the UE 130 may then provide notification of the limited connectivity to an application layer implemented by a transmission protocol stack at the UE 130, 3075. Therefore, one or more applications that rely on low-latency and high-connectivity communication between the UE 130 and the BS 112 may be timely informed of the limited connectivity; these applications may then trigger further countermeasures, if required. For example, these applications could transition into a protected mode or the like.

Countermeasures that may be employed in connection with the various examples described herein are not limited to the communication of the DL control signal 4025 is illustrated in connection with FIG. 17. Alternatively or additionally, it would be possible that one or more of the following countermeasures are triggered: increasing a repetition level of a coverage enhancement (CE) policy for communicating between the UE 130 and the network 100; triggering cell re-selection or handover of the UE 130 to a further BS of the network; and adjusting beamforming parameters for communicating between the UE 130 and the network 100.

A comparably large coverage can be achieved by CE. CE is envisioned to be applied for MTC and NB-IOT. A key feature of the CE is to implement multiple transmission repetitions of a signal, e.g., corresponding to encoded data or a random access preamble. Here, each repetition may include the same redundancy version of the encoded data. The repetitions may be "blind", i.e., may not be in response to a respective retransmission request that may be defined with respect to a HARQ protocol. Rather, repetitions according to CE may be preemptive. Examples are provided by the 3GPP Technical Report (TR) 45.820 version 13.0.0 (2015 - 08), section 6.2.1.3. By employing CE, a likelihood of successful transmission can be increased even in scenarios of poor conditions of communicating on a corresponding wireless link. Thereby, the coverage of networks can be significantly enhanced - even for low transmission powers as envisioned for the MTC and MB-IoT domain. Thus, according to examples, a signal is redundantly communicated using a plurality of repetitions. The count of repetitions is defined by the repetition level of the CE policy. The signal may be encoded according to one and the same redundancy version: Hence, the same encoded version of the signal may be redundantly communicated a number of times according to various examples. Each repetition of the plurality of repetitions can include the signal encoded according to the same redundancy version, e.g., redundancy version 0 or redundancy version 1, etc. Then, it is possible to combine the plurality of repetitions of the encoded signal at the receiver side. Such combination may be implemented in analog or digital domain, e.g., in the baseband. The combination yields a combined signal. Then, the decoding of the encoded signals can be based on the combined signal. Thus, by aggregating the received information across the multiple repetitions, the probability of successfully decoding of the encoded signal increases.

Beamforming may rely on a phased array of antennas. Antenna weights may define the phase and amplitude relationship between each one of the antennas. Thereby, a well-defined spatial profile for transmitting and/or receiving may be set. Spatial multiplexing becomes possible.

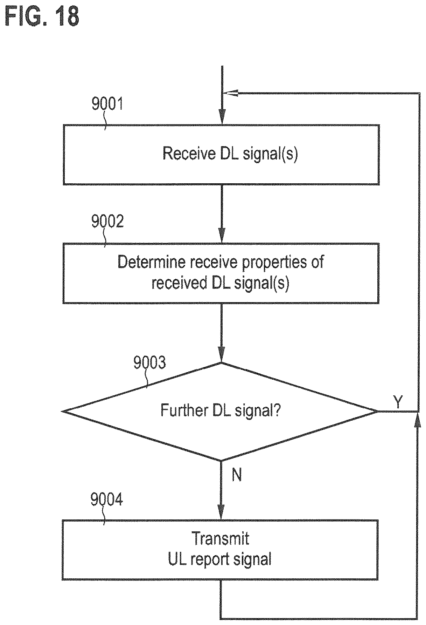

FIG. 18 is a flowchart of a method according to various examples. For example, the method according to FIG. 18 may be executed by the control circuitry 1302 of the UE 130, e.g., based on respective program code loaded from the memory 1303 (cf. FIG. 7).

At 9001, one or more DL signals are received. The one or more DL signals may be one or more of an information block, a paging signal, or any other signal transmitted by a BS. The DL signals may be directed to the receiving UE; or may be directed to another UE. For example, the DL signal may be received in a receive timeslot of a repetitive probing schedule (cf. FIG. 9). It would be possible that, per receive timeslot, multiple DL signals are received (cf. FIG. 10).

At 9002, a receive property or multiple receive properties of the one or more DL signals are determined. For example, a signal strength, signal-to-noise ratio, or a decoding reliability may be considered. This receive property may then be stored, for further use in connection with an UL report signal. It would be possible to store / update statistics of the receive property.

At 9003, it is checked whether a further DL signal is to be received. This check may be in accordance with a reporting schedule that may be predefined. Alternatively or additionally, it could also be checked if the current receive properties indicate non-limited connectivity. If one or more DL signals are to be further received, then 9001 - 9003 are re-executed in a further iteration.

If, at 9003, it is determined that there is no further DL signal to be received - e.g., because limited connectivity has been detected and/or because a reporting schedule (cf. FIG. 11) requires reporting -, then, at 9004, an UL reports signal is transmitted. The UL report signal may be transmitted in a transmit timeslot of a reporting schedule. A data connection may be set up for transmitting the UL report signal or pre-allocated time-frequency resource elements may be used (cf. FIGs. 12 and 13).

The UL report signal can be indicative of the previously determined receive properties of the receive DL signals. For example, the UL report signal could be indicative of statistics of the receive properties (cf. FIGs. 14 - 16).

Generally, transmitting the UL report signal is optional. In some examples, the UE may locally detect limited connectivity and, then, may perform one or more countermeasures to facilitate connectivity locally.

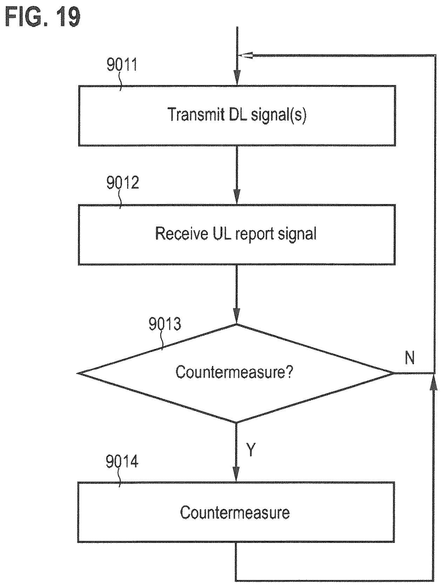

FIG. 19 is a flowchart of a method according to various examples. For example, the method according to FIG. 19 may be executed by the control circuitry 1122 of the BS 112, e.g., based on respective program code loaded from the memory 1123 (cf. FIG. 6).

First, at 9011, one or more DL signals are transmitted. 9011 is inter-related with 9001. The DL signals may be transmitted in accordance with the repetitive probing schedule implemented at the receiving UE; then, knowledge of the repetitive probing schedule is to be provided at the network side. Alternatively, the DL signals may be anyway transmitted, e.g., if they are not specifically directed to the receiving UE. The DL signals may be transmitted at a given repetition rate (cf. FIG. 9).

At 9012, an UL report signal is received. 9012 may be inter-related with 9004. The UL report signal may be received in accordance with a repetitive reporting schedule, e.g., in transmit timeslots of the repetitive reporting schedule (cf. FIG.11).

Based on information included in the UL report signal, at 9013, it can be judged whether a countermeasure is to be triggered. The countermeasure may be triggered if the connectivity of the UE is limited. If it is judged that the countermeasure is to be triggered, then at 9015, the countermeasure is triggered.

Various countermeasures are conceivable. For example, a DL control message may be transmitted from the BS to the UE; the DL control message may be indicative of the limited connectivity. Then, the application layer of the transmission protocol stack implemented by the UE 130 may be notified accordingly (cf. FIG. 17). Other countermeasures may include the adjustment of the repetition level of the CE policy; beamforming parameters; and reselection of the sun on which the UE comes or is connected to.

Summarizing, above, techniques have been described which enable to monitor the connectivity of a UE in a lean and efficient manner. In particular, if compared to application layer-based implementations where the application repeatedly "pings" the UE-network connection, significantly reduced control signaling overhead may be achieved. Furthermore, the power consumption may be reduced. Furthermore, the various parameters of such techniques can be flexibly defined, e.g., the type and/or frequency of occurrence of DL signals for which reception attempts are undertaken. Thereby, the radio access network and/or the core network, and thereby, the operator, may have control of the UE-type requirements and the reachability performance.

While above various scenarios have been described in which the connectivity of the UE is monitored using DL signals, in other scenarios, it would also be possible that the connectivity of the UE is at least partially monitored using UL signals. For example, the UL signals may be transmitted by the UE while the UE is operating in the disconnected mode in which the data connection is not set up between the UE and the network. In such a scenario, it may be possible that the UL signals are transmitted using predefined time-frequency resource elements of the UE. For example, the network, e.g. one or more BSs, may monitor such UL signals and determine whether the connectivity is limited or not. Further a network node may transmit a DL report signal to the UE based on such monitoring of UL signals.

For further illustration, above various examples have been described in which an UL report signal indicative of a receive property of at least one DL signal is transmitted in accordance with a repetitive probing schedule. This is optional. In other examples, the UL report signal may be transmitted on-demand, e.g., if the UE determines limited connectivity based on the receive property. Thus, no pre-defined or fixed reporting schedule may be implemented in such an on-demand scenario.

For still further illustration: Above, various scenarios have been described in which the UE transmits an UL report signal to the BS. Then, the limited connectivity of the UE can be monitored at the network, e.g., at the BS. The network may trigger appropriate countermeasures. However, in other examples, other distributions of logic between the UE and the network are conceivable. For example, it would be possible that the UE, based on the receive property of at least one DL signal determines that the connectivity is limited. Then, the UE may take appropriate countermeasures, e.g., adjusting beamforming parameters, informing an application layer of the transmission protocol stack, etc.. In particular in such a scenario, and thus generally, it may even not be required to transmit the UL report signal to the network.

For still further illustration, while above various examples have been described in connection with cellular networks, similar techniques may also be employed for non-cellular networks.

## Claims

1. A method of operating a communication device (130), comprising:
- while the communication device (130) operates in a disconnected mode (303, 305) in which a data connection (160) is not set-up between the communication device (130) and a network (100), receiving at least one downlink signal (4021) transmitted by a base station (112) of the network (100),
- determining a receive property of the at least one downlink signal (4021) based on said receiving, and
- transmitting an uplink report signal (4022) indicative of the receive property of the at least one downlink signal (4021),
wherein the receive property comprises at least one of a signal strength, signal-to-noise ratio, an error rate of decoding a plurality of downlink signals (4021), or a decoding reliability,
wherein the at least one downlink signal (4021) comprises a plurality of downlink signals (4021),
wherein the plurality of downlink signals (4021) are received in receive timeslots (206) of a repetitive probing schedule,
wherein the receive timeslots (206) are coincident in time domain with paging occasions (202), and
**characterized in that**
the repetitive probing schedule is time-aligned with a discontinuous reception cycle of the disconnected mode (303, 305) such that not every on duration (371) of the discontinuous reception cycle includes a receive timeslot (206) of the repetitive probing schedule.

2. The method of claim 1,
wherein a frequency of occurrence of the receive timeslots (206) is in the range of 1 - 60 s, optionally in the range of 3 - 30 s.

3. The method of claim 1 or 2,
wherein the receive timeslots (206) of the repetitive probing schedule are defined as integer multiples of on durations (371) of the discontinuous reception cycle.

4. The method of claim 3,
wherein the discontinuous reception cycle comprises on durations (371) and off durations (372),
wherein the off durations (372) implement the paging occasions (202).

5. The method of any one of the preceding claims, further comprising:
- transitioning a receiver (1301) of the communication device (130) between an inactive state (383) and a power-save state (382) in accordance with the repetitive probing schedule.

6. The method of any one of the preceding claims ,
wherein a repetition rate of the plurality of downlink signals (4021) is larger than a frequency of occurrence of the receive timeslots (206), optionally at least by a factor of 100, further optionally at least by a factor of 1,000.

7. The method of any one of the preceding claims, further comprising:
- releasing the data connection (160) for operating the communication device (130) in the disconnected mode (303, 305),
wherein said receiving of the at least one downlink signal (4021) is in response to said releasing of the data connection (160).

8. The method of any one of the preceding claims, further comprising:
- receiving a further downlink signal (4025) indicative of limited connectivity of the communication device (130), and
- providing notification of the limited connectivity to an application layer implemented by a transmission protocol stack of the communication device (130).

9. A method of operating a base station (112) of a network (100), comprising:
- transmitting at least one downlink signal (4021), and
- receiving, from a communication device (130), an uplink report signal (4022) indicative of a receive property of the at least one downlink signal (4021) received by the communication device (130) while the communication device (130) operates in a disconnected mode (303, 305) in which a data connection (160) is not set-up between the communication device (130) and the network (100),
wherein the receive property comprises at least one of a signal strength, signal-to-noise ratio, an error rate of decoding a plurality of downlink signals (4021), or a decoding reliability,
wherein the at least one downlink signal (4021) comprises a plurality of downlink signals (4021),
wherein the plurality of downlink signals (4021) are transmitted in receive timeslots (206) of a repetitive probing schedule of the communication device (130),
wherein the receive timeslots (206) are coincident in time domain with paging occasions (202), and
**characterized in that**
the repetitive probing schedule is time-aligned with a discontinuous reception cycle of the disconnected mode (303, 305) such that not every on duration (371) of the discontinuous reception cycle includes a receive timeslot (206) of the repetitive probing schedule.

10. The method of claim 9, further comprising:
- in response to said receiving of the uplink report signal (4022): selectively triggering at least one countermeasure for facilitating connectivity with the communication device (130).

11. The method of claim 10,
wherein the at least one countermeasure comprises at least one of the following: increase of a repetition level of a coverage enhancement policy for communication between the communication device (130) and the network (100); triggering cell re-selection or handover of the communication device (130) to a further base station (112) of a target cell; and adjusting beamforming parameters for communicating between the communication device (130) and the network (100).

12. The method of any one of claims 9 to 11, further comprising:
- in response to said receiving of the uplink report signal (4022): transmitting to the communication device (130), a further downlink signal (4025) indicative of limited connectivity of the communication device (130).

13. The method of any one of the preceding claims,
wherein the uplink report signal (4022) is communicated in accordance with a repetitive reporting schedule.

14. A communication device (130) comprising control circuitry (1302) configured to perform:
- while the communication device (130) operates in a disconnected mode (303, 305) in which a data connection (160) is not set-up between the communication device (130) and a network (100): receiving at least one downlink signal (4021) transmitted by a base station (112) of the network (100),
- determining a receive property of the at least one downlink signal (4021) based on said receiving, wherein the receive property comprises at least one of a signal strength, signal-to-noise ratio, an error rate of decoding a plurality of downlink signals (4021), or a decoding reliability, and
- transmitting an uplink report signal (4022) indicative of the receive property of the at least one downlink signal (4021),
wherein the at least one downlink signal (4021) comprises a plurality of downlink signals (4021),
wherein the plurality of downlink signals (4021) are received in receive timeslots (206) of a repetitive probing schedule,
wherein the receive timeslots (206) are coincident in time domain with paging occasions (202), and
**characterized in that**
the repetitive probing schedule is time-aligned with a discontinuous reception cycle of the disconnected mode (303, 305) such that not every on duration (371) of the discontinuous reception cycle includes a receive timeslot (206) of the repetitive probing schedule.

15. A base station (112) of a network (100) comprising control circuitry (1122) configured to perform:
- transmitting at least one downlink signal (4021), and
- receiving, from a communication device (130), an uplink report signal (4022) indicative of a receive property of the at least one downlink signal (4021) received by the communication device (130) while the communication device (130) operates in a disconnected mode (303, 305) in which a data connection (160) is not set-up between the communication device (130) and the network (100), wherein the receive property comprises at least one of a signal strength, signal-to-noise ratio, an error rate of decoding a plurality of downlink signals (4021), or a decoding reliability,
wherein the at least one downlink signal (4021) comprises a plurality of downlink signals (4021),
wherein the plurality of downlink signals (4021) are transmitted in receive timeslots (206) of a repetitive probing schedule,
wherein the receive timeslots (206) are coincident in time domain with paging occasions (202), and
**characterized in that**
the repetitive probing schedule is time-aligned with a discontinuous reception cycle of the disconnected mode (303, 305) such that not every on duration (371) of the discontinuous reception cycle includes a receive timeslot (206) of the repetitive probing schedule.

## Patentansprüche

1. Verfahren zum Betreiben einer Kommunikationsvorrichtung (130), umfassend:
- während die Kommunikationsvorrichtung (130) in einem unverbundenen Modus (303, 305) arbeitet, in dem keine Datenverbindung (160) zwischen der Kommunikationsvorrichtung (130) und einem Netzwerk (100) eingestellt ist, Empfangen mindestens eines Downlink-Signals (4021), das von einer Basisstation (112) des Netzwerks (100) übertragen wird,
- Bestimmen einer Empfangseigenschaft des mindestens einen Downlink-Signals (4021) basierend auf dem Empfangen, und
- Übertragen eines Uplink-Berichtssignals (4022), das die Empfangseigenschaft des mindestens einen Downlink-Signals (4021) anzeigt,
wobei die Empfangseigenschaft mindestens eine Signalstärke, ein Signal-Rausch-Verhältnis, eine Fehlerrate beim Decodieren einer Vielzahl von Downlink-Signalen (4021) oder eine Decodierzuverlässigkeit umfasst,
wobei das mindestens eine Downlink-Signal (4021) eine Vielzahl von Downlink-Signalen (4021) umfasst,
wobei die Vielzahl von Downlink-Signalen (4021) in Empfangszeitschlitzen (206) eines sich wiederholenden Sondierungsplans empfangen werden,
wobei die empfangenen Zeitschlitze (206) im Zeitbereich mit den Paging-Gelegenheiten (202) zusammenfallen, und
**dadurch gekennzeichnet, dass** der sich wiederholende Sondierungszeitplan mit einem diskontinuierlichen Empfangszyklus des getrennten Modus (303, 305) zeitlich so ausgerichtet ist, dass nicht jede Einschaltdauer (371) des diskontinuierlichen Empfangszyklus einen Empfangszeitschlitz (206) des sich wiederholenden Sondierungszeitplans einschließt.

2. Verfahren nach Anspruch 1,
wobei eine Frequenz des Auftretens der empfangenen Zeitschlitze (206) im Bereich von 1-60 s, optional im Bereich von 3-30 s liegt.

3. Verfahren nach Anspruch 1 oder 2,
wobei die empfangenen Zeitschlitze (206) des sich wiederholenden Sondierungsplans als ganzzahlige Vielfache von Einschaltdauern (371) des diskontinuierlichen Empfangszyklus definiert sind.

4. Verfahren nach Anspruch 3,
wobei der diskontinuierliche Empfangszyklus Einschaltdauern (371) und Ausschaltdauern (372) umfasst,
wobei die Ausschaltdauern (372) die Paging-Gelegenheiten (202) implementieren.

5. Verfahren nach einem der vorstehenden Ansprüche, ferner umfassend:
- Umschalten eines Empfängers (1301) der Kommunikationsvorrichtung (130) zwischen einem inaktiven Zustand (383) und einem Energiesparzustand (382) nach dem sich wiederholenden Sondierungsplan.

6. Verfahren nach einem der vorstehenden Ansprüche,
wobei eine Wiederholungsrate der Vielzahl von Downlink-Signalen (4021) größer ist als eine Frequenz des Auftretens der empfangenen Zeitschlitze (206), optional mindestens um einen Faktor von 100, ferner optional mindestens um einen Faktor von 1.000.

7. Verfahren nach einem der vorstehenden Ansprüche, ferner umfassend:
- Freigeben der Datenverbindung (160) zum Betrieb der Kommunikationsvorrichtung (130) im Trennungsmodus (303, 305),
wobei das Empfangen des mindestens einen Downlink-Signals (4021) in Reaktion auf das Freigeben der Datenverbindung (160) erfolgt.

8. Verfahren nach einem der vorstehenden Ansprüche, ferner umfassend:
- Empfangen eines weiteren Downlink-Signals (4025), das eine eingeschränkte Konnektivität der Kommunikationsvorrichtung (130) anzeigt, und
- Bereitstellen einer Benachrichtigung über die eingeschränkte Konnektivität an eine durch einen Übertragungsprotokollstapel der Kommunikationsvorrichtung (130) implementierte Anwendungsschicht.

9. Verfahren zum Betreiben einer Basisstation (112) eines Netzwerks (100), umfassend:
- Übertragen mindestens eines Downlink-Signals (4021), und
- Empfangen eines Uplink-Berichtssignals (4022) von einer Kommunikationsvorrichtung (130), das eine Empfangseigenschaft des mindestens einen von der Kommunikationsvorrichtung (130) empfangenen Downlink-Signals (4021) anzeigt, während die Kommunikationsvorrichtung (130) in einem getrennten Modus (303, 305) arbeitet, in dem keine Datenverbindung (160) zwischen der Kommunikationsvorrichtung (130) und dem Netzwerk (100) eingestellt ist,
wobei die Empfangseigenschaft mindestens eine Signalstärke, ein Signal-Rausch-Verhältnis, eine Fehlerrate beim Decodieren einer Vielzahl von Downlink-Signalen (4021) oder eine Decodierzuverlässigkeit umfasst,
wobei das mindestens eine Downlink-Signal (4021) eine Vielzahl von Downlink-Signalen (4021) umfasst,
wobei die Vielzahl von Downlink-Signalen (4021) in Empfangszeitschlitzen (206) eines sich wiederholenden Sondierungsplans der Kommunikationsvorrichtung (130) übertragen werden,
wobei die empfangenen Zeitschlitze (206) im Zeitbereich mit den Paging-Gelegenheiten (202) zusammenfallen, und
**dadurch gekennzeichnet, dass** der sich wiederholende Sondierungszeitplan mit einem diskontinuierlichen Empfangszyklus des getrennten Modus (303, 305) zeitlich so ausgerichtet ist, dass nicht jede Einschaltdauer (371) des diskontinuierlichen Empfangszyklus einen Empfangszeitschlitz (206) des sich wiederholenden Sondierungszeitplans einschließt.

10. Verfahren nach Anspruch 9, ferner umfassend:
- als Reaktion auf das Empfangen des Uplink-Berichtssignals (4022): selektives Auslösen von mindestens einer Gegenmaßnahme zur Erleichterung der Verbindung mit der Kommunikationsvorrichtung (130).

11. Verfahren nach Anspruch 10,
wobei die mindestens eine Gegenmaßnahme mindestens eine der folgenden umfasst: Steigerung einer Wiederholungsstufe einer Richtlinie zur Verstärkung der Abdeckung für die Kommunikation zwischen der Kommunikationsvorrichtung (130) und dem Netzwerk (100); Auslösen der Zellenneuwahl oder Übergabe der Kommunikationsvorrichtung (130) an eine weitere Basisstation (112) einer Zielzelle; und Einstellen der Strahlformungsparameter für die Kommunikation zwischen der Kommunikationsvorrichtung (130) und dem Netzwerk (100).

12. Verfahren nach einem der Ansprüche 9 bis 11, ferner umfassend:
- als Reaktion auf das Empfangen des Uplink-Berichtssignals (4022): Übertragen eines weiteren Downlink-Signals (4025) an die Kommunikationsvorrichtung (130), das eine begrenzte Verbindung der Kommunikationsvorrichtung (130) anzeigt.

13. Verfahren nach einem der vorstehenden Ansprüche,
wobei das Uplink-Berichtssignal (4022) nach einem sich wiederholenden Berichtsplan kommuniziert wird.

14. Kommunikationsvorrichtung (130), umfassend eine Steuerschaltlogik (1302), die konfiguriert ist zum Durchführen von Folgendem:
- während die Kommunikationsvorrichtung (130) in einem unverbundenen Modus (303, 305) arbeitet, in dem keine Datenverbindung (160) zwischen der Kommunikationsvorrichtung (130) und einem Netzwerk (100) eingestellt ist: Empfangen mindestens eines Downlink-Signals (4021), das von einer Basisstation (112) des Netzwerks (100) übertragen wird,
- Bestimmen einer Empfangseigenschaft des mindestens einen Downlink-Signals (4021) basierend auf dem Empfangen, wobei die Empfangseigenschaft mindestens eine Signalstärke, ein Signal-Rausch-Verhältnis, eine Fehlerrate beim Decodieren einer Vielzahl von Downlink-Signalen (4021) oder eine Decodierzuverlässigkeit umfasst, und
- Übertragen eines Uplink-Berichtssignals (4022), das die Empfangseigenschaft des mindestens einen Downlink-Signals (4021) anzeigt,
wobei das mindestens eine Downlink-Signal (4021) eine Vielzahl von Downlink-Signalen (4021) umfasst,
wobei die Vielzahl von Downlink-Signalen (4021) in Empfangszeitschlitzen (206) eines sich wiederholenden Sondierungsplans empfangen werden,
wobei die empfangenen Zeitschlitze (206) im Zeitbereich mit den Paging-Gelegenheiten (202) zusammenfallen, und
**dadurch gekennzeichnet, dass** der sich wiederholende Sondierungszeitplan mit einem diskontinuierlichen Empfangszyklus des getrennten Modus (303, 305) zeitlich so ausgerichtet ist, dass nicht jede Einschaltdauer (371) des diskontinuierlichen Empfangszyklus einen Empfangszeitschlitz (206) des sich wiederholenden Sondierungszeitplans einschließt.

15. Basisstation (112) eines Netzwerks (100), umfassend eine Steuerschaltlogik (1122), die konfiguriert ist zum Durchführen von Folgendem:
- Übertragen mindestens eines Downlink-Signals (4021), und
- Empfangen eines Uplink-Berichtssignals (4022) von einer Kommunikationsvorrichtung (130), das eine Empfangseigenschaft des mindestens einen Downlink-Signals (4021) anzeigt, das von der Kommunikationsvorrichtung (130) empfangen wird, während die Kommunikationsvorrichtung (130) in einem getrennten Modus (303, 305) arbeitet, in dem eine Datenverbindung (160) zwischen der Kommunikationsvorrichtung (130) und dem Netzwerk (100) nicht eingestellt ist, wobei die Empfangseigenschaft mindestens eines von einer Signalstärke, einem Signal-Rausch-Verhältnis, einer Fehlerrate der Decodierung einer Vielzahl von Downlink-Signalen (4021) oder einer Decodierungszuverlässigkeit umfasst,
wobei das mindestens eine Downlink-Signal (4021) eine Vielzahl von Downlink-Signalen (4021) umfasst,
wobei die Vielzahl von Downlink-Signalen (4021) in Empfangszeitschlitzen (206) eines sich wiederholenden Sondierungsplans übertragen werden,
wobei die empfangenen Zeitschlitze (206) im Zeitbereich mit den Paging-Gelegenheiten (202) zusammenfallen, und
**dadurch gekennzeichnet, dass** der sich wiederholende Sondierungszeitplan mit einem diskontinuierlichen Empfangszyklus des getrennten Modus (303, 305) zeitlich so ausgerichtet ist, dass nicht jede Einschaltdauer (371) des diskontinuierlichen Empfangszyklus einen Empfangszeitschlitz (206) des sich wiederholenden Sondierungszeitplans einschließt.

## Revendications

1. Procédé permettant de faire fonctionner un dispositif de communication (130), comprenant :
- pendant que le dispositif de communication (130) fonctionne dans un mode déconnecté (303, 305) dans lequel une connexion de données (160) n'est pas établie entre le dispositif de communication (130) et un réseau (100), la réception d'au moins un signal de liaison descendante (4021) transmis par une station de base (112) du réseau (100),
- la détermination d'une propriété de réception de l'au moins un signal de liaison descendante (4021) sur la base de ladite réception, et
- la transmission d'un signal de rapport de liaison montante (4022) indiquant la propriété de réception de l'au moins un signal de liaison descendante (4021),
dans lequel la propriété de réception comprend au moins l'un parmi une intensité de signal, un rapport signal/bruit, un taux d'erreur de décodage d'une pluralité de signaux de liaison descendante (4021) ou une fiabilité de décodage,
dans lequel l'au moins un signal de liaison descendante (4021) comprend une pluralité de signaux de liaison descendante (4021),
dans lequel la pluralité de signaux de liaison descendante (4021) est reçue dans des intervalles de temps de réception (206) d'un plan d'exécution de sondage répétitif,
dans lequel les intervalles de temps de réception (206) coïncident dans le domaine temporel avec des occasions de radiomessagerie (202), et
**caractérisé en ce que** le plan d'exécution de sondage répétitif est synchronisé avec un cycle de réception discontinu du mode déconnecté (303, 305) de sorte que les durées d'activation (371) du cycle de réception discontinu ne comportent pas toutes un intervalle de temps de réception (206) du plan d'exécution de sondage répétitif.

2. Procédé selon la revendication 1,
dans lequel une fréquence d'occurrence des intervalles de temps de réception (206) est dans la plage allant de 1 à 60 s, éventuellement dans la plage allant de 3 à 30 s.

3. Procédé selon les revendications 1 ou 2,
dans lequel les intervalles de temps de réception (206) du plan d'exécution de sondage répétitif sont définis comme des multiples entiers des durées d'activation (371) du cycle de réception discontinu.

4. Procédé selon la revendication 3,
dans lequel le cycle de réception discontinu comprend des durées d'activation (371) et des durées de désactivation (372),
dans lequel les durées de désactivation (372) mettent en œuvre les occasions de radiomessagerie (202).

5. Procédé selon l'une quelconque des revendications précédentes, comprenant en outre :
- la transition d'un récepteur (1301) du dispositif de communication (130) entre un état inactif (383) et un état d'économie d'énergie (382) conformément au plan d'exécution de sondage répétitif.

6. Procédé selon l'une quelconque des revendications précédentes,
dans lequel un taux de répétition de la pluralité de signaux de liaison descendante (4021) est supérieur à une fréquence d'occurrence des intervalles de temps de réception (206), éventuellement au moins par un facteur de 100, et en outre éventuellement au moins par un facteur de 1 000.

7. Procédé selon l'une quelconque des revendications précédentes, comprenant en outre :
- la libération de la connexion de données (160) pour faire fonctionner le dispositif de communication (130) en mode déconnecté (303, 305),
dans lequel ladite réception de l'au moins un signal de liaison descendante (4021) est en réponse à ladite libération de la connexion de données (160).

8. Procédé selon l'une quelconque des revendications précédentes, comprenant en outre :
- la réception d'un signal de liaison descendante supplémentaire (4025) indiquant une connectivité limitée du dispositif de communication (130), et
- la fourniture d'une notification de la connectivité limitée à une couche d'application mise en œuvre par une pile de protocoles de transmission du dispositif de communication (130).

9. Procédé permettant de faire fonctionner une station de base (112) d'un réseau (100), comprenant :
- la transmission d'au moins un signal de liaison descendante (4021), et
- la réception, en provenance d'un dispositif de communication (130), d'un signal de rapport de liaison montante (4022) indiquant une propriété de réception de l'au moins un signal de liaison descendante (4021) reçu par le dispositif de communication (130) pendant que le dispositif de communication (130) fonctionne dans un mode déconnecté (303, 305) dans lequel une connexion de données (160) n'est pas établie entre le dispositif de communication (130) et le réseau (100),
dans lequel la propriété de réception comprend au moins l'un parmi une intensité de signal, un rapport signal/bruit, un taux d'erreur de décodage d'une pluralité de signaux de liaison descendante (4021) ou une fiabilité de décodage,
dans lequel l'au moins un signal de liaison descendante (4021) comprend une pluralité de signaux de liaison descendante (4021),
dans lequel la pluralité de signaux de liaison descendante (4021) est transmise dans des intervalles de temps de réception (206) d'un plan d'exécution de sondage répétitif du dispositif de communication (130),
dans lequel les intervalles de temps de réception (206) coïncident dans le domaine temporel avec des occasions de radiomessagerie (202), et
**caractérisé en ce que** le plan d'exécution de sondage répétitif est synchronisé avec un cycle de réception discontinu du mode déconnecté (303, 305) de sorte que les durées d'activation (371) du cycle de réception discontinu ne comportent pas toutes un intervalle de temps de réception (206) du plan d'exécution de sondage répétitif.

10. Procédé selon la revendication 9, comprenant en outre :
- en réponse à ladite réception du signal de rapport de liaison montante (4022) : le déclenchement sélectif d'au moins une contre-mesure pour faciliter une connectivité avec le dispositif de communication (130).

11. Procédé selon la revendication 10,
dans lequel l'au moins une contre-mesure comprend au moins l'un parmi les éléments suivants : augmentation d'un niveau de répétition d'une politique d'amélioration de couverture pour une communication entre le dispositif de communication (130) et le réseau (100) ; déclenchement d'une nouvelle sélection de cellule ou transfert du dispositif de communication (130) vers une station de base (112) supplémentaire d'une cellule cible ; et ajustement de paramètres de formation de faisceaux pour une communication entre le dispositif de communication (130) et le réseau (100).

12. Procédé selon l'une quelconque des revendications 9 à 11, comprenant en outre :
- en réponse à ladite réception du signal de rapport de liaison montante (4022) : la transmission au dispositif de communication (130) d'un signal de liaison descendante supplémentaire (4025) indiquant une connectivité limitée du dispositif de communication (130).

13. Procédé selon l'une quelconque des revendications précédentes,
dans lequel le signal de rapport de liaison montante (4022) est communiqué conformément à un plan d'exécution de rapport répétitif.

14. Dispositif de communication (130) comprenant une circuiterie de commande (1302) configurée pour effectuer :
- pendant que le dispositif de communication (130) fonctionne dans un mode déconnecté (303, 305) dans lequel une connexion de données (160) n'est pas établie entre le dispositif de communication (130) et un réseau (100) : la réception d'au moins un signal de liaison descendante (4021) transmis par une station de base (112) du réseau (100),
- la détermination d'une propriété de réception de l'au moins un signal de liaison descendante (4021) sur la base de ladite réception, dans lequel la propriété de réception comprend au moins l'un parmi une intensité du signal, un rapport signal/bruit, un taux d'erreur de décodage d'une pluralité de signaux de liaison descendante (4021), ou une fiabilité de décodage, et
- la transmission d'un signal de rapport de liaison montante (4022) indiquant la propriété de réception de l'au moins un signal de liaison descendante (4021),
dans lequel l'au moins un signal de liaison descendante (4021) comprend une pluralité de signaux de liaison descendante (4021),
dans lequel la pluralité de signaux de liaison descendante (4021) est reçue dans des intervalles de temps de réception (206) d'un plan d'exécution de sondage répétitif,
dans lequel les intervalles de temps de réception (206) coïncident dans le domaine temporel avec des occasions de radiomessagerie (202), et
**caractérisé en ce que** le plan d'exécution de sondage répétitif est synchronisé avec un cycle de réception discontinu du mode déconnecté (303, 305) de sorte que les durées d'activation (371) du cycle de réception discontinu ne comportent pas toutes un intervalle de temps de réception (206) du plan d'exécution de sondage répétitif.

15. Une station de base (112) d'un réseau (100) comprenant une circuiterie de commande (1122) configurée pour effectuer :
- la transmission d'au moins un signal de liaison descendante (4021), et
- la réception, en provenance d'un dispositif de communication (130), d'un signal de rapport de liaison montante (4022) indiquant une propriété de réception de l'au moins un signal de liaison descendante (4021) reçu par le dispositif de communication (130) pendant que le dispositif de communication (130) fonctionne dans un mode déconnecté (303, 305) dans lequel une connexion de données (160) n'est pas établie entre le dispositif de communication (130) et le réseau (100), dans laquelle la propriété de réception comprend au moins l'un parmi une intensité de signal, un rapport signal/bruit, un taux d'erreur de décodage d'une pluralité de signaux de liaison descendante (4021) ou une fiabilité de décodage,
dans laquelle l'au moins un signal de liaison descendante (4021) comprend une pluralité de signaux de liaison descendante (4021),
dans laquelle la pluralité de signaux de liaison descendante (4021) est transmise dans des intervalles de temps de réception (206) d'un plan d'exécution de sondage répétitif,
dans laquelle les intervalles de temps de réception (206) coïncident dans le domaine temporel avec des occasions de radiomessagerie (202), et
**caractérisée en ce que** le plan d'exécution de sondage répétitif est synchronisé avec un cycle de réception discontinu du mode déconnecté (303, 305) de sorte que les durées d'activation (371) du cycle de réception discontinu ne comportent pas toutes un intervalle de temps de réception (206) du plan d'exécution de sondage répétitif.
